(19) Europäisches Patentamt
European Patent Office
Office européen des brevets

(11) EP 3 361 619 B1

(12) **EUROPEAN PATENT SPECIFICATION**

(45) Date of publication and mention
of the grant of the patent:
**09.10.2019 Bulletin 2019/41**

(51) Int Cl.:
***H02M 7/483*** *(2007.01)* ***H02M 7/797*** *(2006.01)*

(21) Application number: **17155458.7**

(22) Date of filing: **09.02.2017**

(54) **VOLTAGE SOURCE CONVERTER**

SPANNUNGSQUELLENUMRICHTER

CONVERTISSEUR DE SOURCE DE TENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2018 Bulletin 2018/33**

(73) Proprietor: **General Electric Technology GmbH
5400 Baden (CH)**

(72) Inventors:
• **TRAINER, David Reginald
Derby, Derbyshire DE24 0AQ (GB)**
• **JASIM, Omar Fadhel
Nottingham, Nottinghamshire NG8 2RW (GB)**

• **CHIVITE-ZABALZA, Francisco Javier
Stafford, Staffordshire ST17 4XQ (GB)**
• **COSTABEBER, Alessandro
Nottingham, NG2 2LE (GB)**
• **AMANKWAH, Emmanuel
Accra (GH)**
• **CLARE, Jonathan Charles
Nottingham, NG12 5EG (GB)**

(74) Representative: **Openshaw & Co.
8 Castle Street
Farnham, Surrey GU9 7HR (GB)**

(56) References cited:
**EP-A1- 2 916 447     EP-A1- 3 096 446**

**Description**

This invention relates to a voltage source converter, particularly for use in high voltage direct current (HVDC) power transmission.

In HVDC power transmission networks alternating current (AC) power is typically converted to direct current (DC) power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance.

The conversion between DC power and AC power is utilized in power transmission networks where it is necessary to interconnect the DC and AC networks. In any such power transmission network, converters are required at each interface between AC and DC power to effect the required conversion from AC to DC or from DC to AC.

According to an aspect of the invention, there is provided a voltage source converter comprising first and second DC terminals for connection to a DC network, the voltage source converter including a plurality of limbs connected between the first and second DC terminals, each limb including:

a phase element having a plurality of switching elements and at least one AC terminal for connection to a respective phase of a multi-phase AC network, the plurality of switching elements configured to be switchable to selectively interconnect a DC side voltage at a DC side of the phase element and an AC side voltage at an AC side of the phase element;

a first sub-converter configured to be controllable to act as a waveform synthesizer to modify a first DC voltage presented to the DC network, the first sub-converter including at least one energy storage device capable of storing and releasing energy to selectively provide a voltage; and

a second sub-converter connected in series with the phase element in an electrical block, the first sub-converter connected in parallel with the electrical block, the second sub-converter configured to be controllable to act as a waveform synthesizer to modify a second DC voltage presented to the DC side of the phase element, the second sub-converter including at least one energy storage device capable of storing and releasing energy to selectively provide a voltage,

wherein the voltage source converter further includes a controller configured to selectively operate in an energy management mode when there is an imbalance between the AC side voltages at the AC sides of the phase elements, the controller in the energy management mode configured to operate each limb so as to:

control at least one sequence current component of a respective phase current at the AC side of each phase element to control an exchange of power between the voltage source converter and the AC network; and

balance the AC and DC side powers exchanged by each limb with the AC and DC networks respectively so that a respective net change in energy stored in the energy storage devices of each limb is controlled to be zero or substantially zero.

Operation of the voltage source converter to transfer power between the AC and DC networks could result in energy accumulation in (or energy loss from) at least one energy storage device, thus resulting in deviation of the energy level of at least one energy storage device from a reference value.

Such a deviation is undesirable because, if too little energy is stored within a given energy storage device then the voltage the corresponding module is able to generate is reduced, whereas if too much energy is stored in a given energy storage device then over-voltage problems may arise. The former would require the addition of a power source to restore the energy level of the affected energy storage device to the reference value, while the latter would require an increase in voltage rating of one or more energy storage devices to prevent the over-voltage problems, thus adding to the overall size, weight and cost of the voltage source converter. In addition if too little energy is stored within a given energy storage device then the voltage source converter might trip due to under-voltage protection. EP3096446 discloses a method of controlling a converter comprising first and second DC terminals for connection to a DC network, the converter including at least one limb connected between the first and second DC terminals, the or each limb including: a phase element having a plurality of switching elements and at least one AC terminal for connection to an AC network, the plurality of switching elements being configured to be switchable to selectively interconnect a DC side voltage at a DC side of the phase element and an AC side voltage at an AC side of the phase element; a first sub-converter connected in series with the DC side of the phase element in an electrical block, the first sub-converter being configured to be controllable to act as a first voltage source; and a second sub-converter connected in parallel with the electrical block, the second sub-converter being configured to be controllable to act as a second voltage source. GB2519793 discloses a voltage source converter comprising first and second DC terminals for connection to a DC electrical network and at least one limb connected between the first and second terminals.

It is therefore desirable to regulate the energy stored in the energy storage devices of the voltage source converter, thereby obviating the problems associated with a deviation of the energy level of at least one energy storage device from the reference value.

For the aforementioned voltage source converter topology without the controller, the inventors have found that conventional energy regulation techniques normally applied under balanced AC side voltage conditions are not as effective when there is an imbalance between the AC side voltages. This is because the presence of negative and/or zero sequence voltage components in the unbalanced AC side voltages leads to an unbalanced operation of the limbs of the voltage source converter, which renders the conventional energy regulation techniques ineffective in regulating the energy stored in the energy storage devices of the voltage source converter, thus leading to possible stored energy drift and inoperability of the voltage source converter.

The configuration of the controller of the voltage source converter of the invention allows the controller to operate in the energy management mode under unbalanced AC side voltage conditions in order to ensure that the power requirements of the voltage source converter are met and at the same time guarantee internal power balance in each limb of the voltage source converter which enables effective energy regulation of the energy storage devices of the limbs. This in turn provides safe and reliable control over the energy stored in the energy storage devices of the limbs over a wide range of active power P and reactive power Q and for different amplitudes and phases of the negative sequence components and/or zero sequence components of the AC side voltages with respect to the positive sequence components.

The respective net change in energy stored in the energy storage devices of each limb is preferably controlled to be zero or substantially zero over a defined period of time, e.g. a single power frequency cycle.

The at least one sequence current component of the respective phase current controlled in the energy management mode of the controller may include:

    only a positive sequence current component;
    only positive and negative sequence current components;
    only positive and zero sequence current components; or
    positive, negative and zero sequence current components.

The choice of the least one sequence current component to be controlled in the energy management mode of the controller depends on the power requirements of the voltage source converter and on constraints imposed on the voltage source converter.

In embodiments of the invention, the controller in the energy management mode may be configured to operate each limb so as to control the at least one sequence current component of the respective phase current at the AC side of each phase element to control the ratio of the AC side active powers exchanged by the respective limbs with the AC network. In such embodiments, the ratio of the AC side active powers may be controlled to be equal or substantially equal.

The ability to control the ratio of the AC side active powers in this manner makes it more straightforward to balance the AC and DC side powers exchanged by each limb with the AC and DC networks respectively.

In further embodiments of the invention, the controller in the energy management mode may be configured to operate each limb so as to control the at least one sequence current component of the respective phase current at the AC side of each phase element to control the ratio of AC side reactive powers exchanged by the respective limbs with the AC network.

During an AC voltage depression, the converter is normally expected to respond with reactive power (e.g. capacitive reactive power) to support the AC network and help with AC voltage restoration. The converter response would be based on the observation of the AC network's positive sequence voltage and on the defined total reactive power of the converter.

Controlling the ratio of the AC side reactive powers on a per-phase basis enables the converter to provide a more effective voltage support to the AC network in the event of voltage changes. In particular, the ability to control the distribution of the total reactive power among the different phases beneficially provides independent control over the AC side reactive power in each phase, which in turn gives the benefit of controlling the magnitude of each phase voltage separately and thereby provides a way of addressing different levels of voltage depression or rise in the phases. For example, controlling the ratio of the AC side reactive powers on a per-phase basis enables the converter to inject more reactive power in the phase experiencing a larger voltage drop when compared to the other phases.

In still further embodiments of the invention, the controller in the energy management mode may be configured to operate each limb so as to control the at least one sequence current component of the respective phase current at the AC side of each phase element to minimise or cancel a power oscillation component of the instantaneous power exchanged by the voltage source converter with the AC network.

Minimising or cancelling a power oscillation component of the instantaneous power exchanged by the voltage source converter with the AC network reduces energy oscillations in the energy storage devices of the limbs, thus permitting the use of smaller energy storage devices.

In embodiments of the invention, the controller in the energy management mode may be configured to operate the first sub-converter of each limb to modify the respective first DC voltage in order to balance the AC and DC side powers exchanged by the respective limb with the AC and DC networks respectively so that a net change in energy stored in the energy storage devices of the respective limb is controlled to be zero or substantially zero.

Such balancing of the AC and DC side powers may be carried out when the ratio of the AC side active powers cannot be controlled. The configuration of the controller in this manner provides a reliable means for balancing the AC and DC side powers during unbalanced AC side voltage conditions.

In further embodiments of the invention, the controller in the energy management mode may be configured to operate each limb to modify the respective AC side voltage in order to balance the AC and DC side powers exchanged by the respective limb with the AC and DC networks respectively so that a net change in energy stored in the energy storage devices of the respective limb is controlled to be zero or substantially zero.

Such balancing of the AC and DC side powers may be carried out when the ratio of the AC side active powers can be controlled. Balancing the AC and DC side powers by modifying the AC side voltages allows the invention to be performed over the entire P-Q envelope. In contrast, balancing the AC and DC side powers by modifying the first DC voltages reduces the operational range over which the invention can be applied.

Zero sequence components are preferably set to zero during the energy management mode in order to prevent the zero sequence components from adversely affecting the AC network.

Optionally the voltage source converter may further include a transformer arrangement, a first side of the transformer arrangement connected to the AC network, a second side of the transformer arrangement connected to the AC sides of the phase elements, the transformer arrangement configured to prevent a transfer of zero sequence current components between the first and second sides of the transformer.

The provision of the transformer arrangement prevents the transfer of zero sequence components from the second side of the transformer to the first side of the transformer. This in turn obviates the need to set the zero sequence components to zero during the energy management mode, and thus permits the voltage source converter to freely control the values of the zero sequence components of the phase currents in the energy management mode. The ability to freely control the values of the zero sequence components of the phase currents in the energy management mode broadens the functionality of the controller in the energy management mode.

Optionally the controller may be configured to selectively control an exchange of energy between the first and second sub-converters in each limb by:

> for each limb, operating the first sub-converter to synthesize at least one first voltage component, and operating the second sub-converter to synthesize at least one second voltage component that is in anti-phase with the or each first voltage component, wherein each of the first and second voltage components is in-phase with a current flowing through the first and second sub-converters; and
> for each limb, operating the second sub-converter to synthesize at least one third voltage component so as to minimise or cancel the or each second voltage component, wherein the or each third voltage component is in-quadrature with the current flowing through the second sub-converter.

The synthesis of the first and second voltage components in each limb enables regulation of the energy storage devices of the sub-converters at any time during the operation of the voltage source converter without affecting the power transfer between the AC and DC networks. The second voltage components synthesized by the second sub-converters may be shaped such that the summation of the first DC voltages leaves a combined, ripple-free DC voltage for presentation to the DC network.

However, under unbalanced AC side voltage conditions, the presence of negative and/or zero sequence components in the phase currents results in a variation of the amplitudes of the second voltage components synthesized by the second sub-converters, which means that the summation of the first DC voltages results in DC ripple in the DC voltage presented to the DC network.

The synthesis of the third voltage components by the second sub-converters permits the regulation of the energy storage devices of the sub-converters under unbalanced AC side voltage conditions while ensuring that a ripple-free DC voltage is presented to the DC network

Each voltage component may be any one of: a positive integer multiple of a 2nd harmonic voltage component; a 2nd harmonic voltage component, a 4th harmonic voltage component; an 8th harmonic voltage component; a 10th harmonic voltage component; or a $(3(2n-1)\pm1)^{th}$ harmonic voltage component, whereby n is a positive integer multiple.

It will be appreciated that each limb and its components may be configured in different ways to vary the topology of the voltage source converter, non-limiting examples of which are described as follows.

The manner in which each limb is connected between the first and second DC terminals may vary. For example, the plurality of limbs may be connected in series between the first and second DC terminals.

The plurality of switching elements in each phase element may include two parallel-connected pairs of series-connected switching elements, a junction between each pair of series-connected switching elements defining an AC terminal for connection to the respective phase of the AC network.

Each sub-converter may include at least one module, the or each module including at least one switching element and at least one energy storage device, the or each switching element and the or each energy storage device in the or each module arranged to be combinable to selectively provide a voltage source.

The inclusion of the or each module in each sub-converter provides each sub-converter with a reliable means of acting as a waveform synthesizer.

The or each module in each sub-converter may vary in configuration.

In a first exemplary configuration of a sub-converter module, the or each switching element and the or each energy storage device in the module may be arranged to be combinable to selectively provide a unidirectional voltage source. For example, the module may include a pair of switching elements connected in parallel with an energy storage device in a half-bridge arrangement to define a 2-quadrant unipolar module that can provide zero or positive voltage and can conduct current in two directions.

In a second exemplary configuration of a sub-converter module, the or each switching element and the or each energy storage device in the module may be arranged to be combinable to selectively provide a bidirectional voltage source. For example, the module may include two pairs of switching elements connected in parallel with an energy storage device in a full-bridge arrangement to define a 4-quadrant bipolar module that can provide negative, zero or positive voltage and can conduct current in two directions.

In embodiments of the invention, each sub-converter may be a multilevel converter.

More specifically, each sub-converter may include a plurality of series-connected modules that defines a chain-link converter. The structure of the chain-link converter permits build-up of a combined voltage across the chain-link converter, which is higher than the voltage available from each of its individual modules, via the insertion of the energy storage devices of multiple modules, each providing its own voltage, into the chain-link converter. In this manner switching of the or each switching element in each module causes the chain-link converter to provide a stepped variable voltage source, which permits the generation of a voltage waveform across the chain-link converter using a step-wise approximation. As such the chain-link converter is capable of providing a wide range of complex voltage waveforms.

At least one switching element may include at least one self-commutated switching device. The or each self-commutated switching device may be an insulated gate bipolar transistor, a gate turn-off thyristor, a field effect transistor, an injection-enhanced gate transistor, an integrated gate commutated thyristor or any other self-commutated switching device. The number of switching devices in each switching element may vary depending on the required voltage and current ratings of that switching element.

At least one switching element may further include a passive current check element that is connected in anti-parallel with the or each switching device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

Each energy storage device may be any device that is capable of storing and releasing energy to selectively provide a voltage, e.g. a capacitor, fuel cell or battery.

In a preferred embodiment of the invention, the voltage source converter includes three limbs, each of which is connectable to a respective phase of a three-phase AC network. It will be appreciated that the voltage source converter may include a different number of limbs, each of which is connectable to a respective phase of an AC network with the corresponding number of phases.

It will also be appreciated that the use of the terms "first" and "second", and the like, in this patent specification is merely intended to help distinguish between similar features (e.g. the first and second sub-converters), and is not intended to indicate the relative importance of one feature over another feature, unless otherwise specified.

A preferred embodiment of the invention will now be described, by way of a non-limiting example, with reference to the accompanying drawings in which:

Figure 1 shows schematically a voltage source converter according to an embodiment of the invention;

Figures 2a and 2b respectively show, in schematic form, the structure of a 2-quadrant unipolar module and a 4-quadrant bipolar module;

Figures 3 and 4 show schematically electrical circuits representing the voltage source converter of Figure 1;

Figure 5 shows schematically an electrical circuit representing the voltage source converter of Figure 1 with the addition of a transformer tertiary delta winding;

Figures 6 and 7 respectively illustrate the control of the ratios of the AC side active and reactive powers at the AC sides of the limbs of the voltage source converter of Figure 1;

Figures 8 and 9 respectively illustrate the presence of $2\omega$ components in the instantaneous power of the voltage source converter of Figure 1 under balanced and unbalanced AC side voltage conditions;

Figures 10 to 13 illustrate four modes of operation of the voltage source converter under unbalanced AC side voltage conditions with reference to the electrical circuit of Figure 3;

Figures 14 to 16 illustrate power balancing procedures for the voltage source converter under unbalanced AC side voltage conditions with reference to the electrical circuit of Figure 3;

Figures 17 and 18 illustrate two modes of operation of the voltage source converter under unbalanced AC side voltage conditions with reference to the electrical circuit of Figure 5;

Figure 19 shows schematically a plurality of phasors $V_{EMa}$, $V_{EMb}$, $V_{EMc}$ of the in-phase second 2nd harmonic voltage components synthesized by the second sub-converters of the voltage source converter of Figure 1; and

Figures 20 to 24 illustrate simulations of the operation of the voltage source converter in different energy management modes under unbalanced AC side voltage conditions.

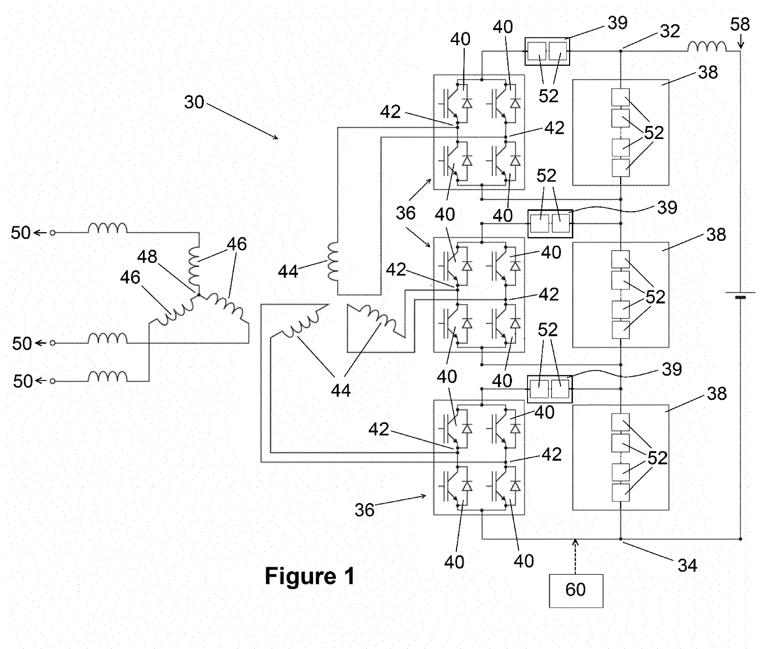

A voltage source converter 30 according to an embodiment of the invention is shown in Figure 1.

The voltage source converter 30 comprises first and second DC terminals 32,34, a plurality of phase elements 36, a plurality of first sub-converters 38, and a plurality of second sub-converters 39.

Each phase element 36 includes two parallel-connected pairs of series-connected switching elements 40. A junction between each pair of series-connected switching elements 40 defines an AC terminal. The AC terminals of each phase element 36 define the AC side 42 of that phase element 36.

In Figure 1, the AC terminals of each phase element 36 are interconnected by a respective one of a plurality of open secondary transformer windings 44. Each secondary transformer winding 44 is mutually coupled with a respective one of a plurality of primary transformer windings 46. The plurality of primary transformer windings 46 are connected in a star configuration in which a first end of each primary transformer winding 46 is connected to a common junction 48 and a second end of each primary transformer winding 46 is connected to a respective phase of a three-phase AC network 50. In this manner, in use, the AC side 42 of each phase element 36 is connected to a respective phase of a three-phase AC network 50. The common junction 48 defines a neutral point of the plurality of primary transformer windings 46, and is grounded (not shown).

Each phase element 36 is connected in series with a respective one of the plurality of second sub-converters 39 to define an electrical block. Each first sub-converter 38 is connected in parallel with a respective one of the electrical blocks to form a limb.

Each sub-converter 38,39 includes a plurality of modules 52.

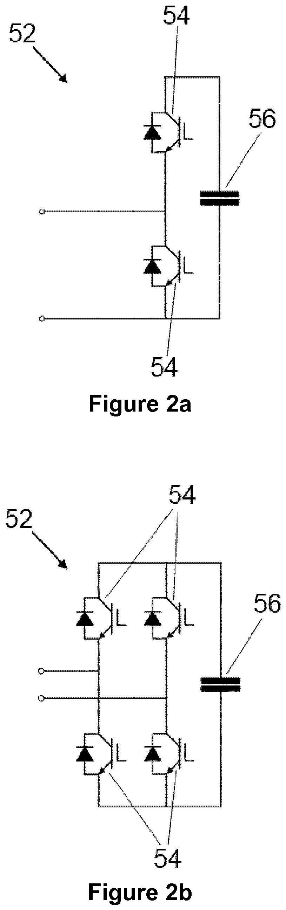

Each module 52 of each first sub-converter 38 includes a pair of switching elements 54 and an energy storage device 56 in the form of a capacitor. In each first sub-converter 38, the pair of switching elements 54 is connected in parallel with the capacitor 56 in a half-bridge arrangement to define a 2-quadrant unipolar module that can provide zero or positive voltage and can conduct current in two directions, as shown in Figure 2a.

Each module 52 of each second sub-converter 39 includes two pairs of switching elements 54 and an energy storage device 56 in the form of a capacitor. In each second sub-converter 39, the pairs of switching elements 54 are connected in parallel with the capacitor 56 in a full-bridge arrangement to define a 4-quadrant bipolar module that can provide negative, zero or positive voltage and can conduct current in two directions, as shown in Figure 2b.

The plurality of limbs are connected in series between the first and second DC terminals 32,34. In use, the first and second DC terminals 32,34 are respectively connected to first and second terminals of a DC network 58, the first terminal of the DC network 58 carrying a positive DC voltage, the second terminal of the DC network 58 carrying a negative DC voltage.

The configuration of each limb as set out above means that, in use, a DC voltage appears across the parallel-connected pairs of series-connected switching elements 40 of each phase element 36.

As such, in use, each phase element 36 interconnect a DC side voltage at a DC side of the phase element 36 and an AC side voltage at an AC side 42 of the phase element 36. In other embodiments, it is envisaged that each phase element may include a plurality of switching elements with a different configuration to interconnect a DC voltage and an AC voltage.

Each switching element 40,54 includes a single switching device. Each switching element 40,54 further includes a passive current check element that is connected in anti-parallel with each switching device.

Each switching device is in the form of an insulated gate bipolar transistor (IGBT). It is envisaged that, in other embodiments of the invention, each IGBT may be replaced by a gate turn-off thyristor, a field effect transistor, an injection-enhanced gate transistor, an integrated gate commutated thyristor or any other self-commutated switching device. The number of switching devices in each switching element may vary depending on the required voltage rating of that switching element.

Each passive current check element includes a passive current check device in the form of a diode. It is envisaged that, in other embodiments, each diode may be replaced by any other device that is capable of limiting current flow in only one direction. The number of passive current check devices in each passive current check element may vary depending on the required voltage rating of that passive current check element.

It is further envisaged that, in other embodiments of the invention, each capacitor may be replaced by another type of energy storage device that is capable of storing and releasing energy to selectively provide a voltage, e.g. a fuel cell or battery.

The plurality of series-connected modules 52 in each sub-converter 38,39 defines a chain-link converter.

The capacitor 56 of each module 52 is selectively bypassed or inserted into the chain-link converter by changing the states of the switching elements 54. This selectively directs current through the capacitor 56 or causes current to bypass the capacitor 56 so that the module 52 provides a zero or positive voltage in the case of each first sub-converter 38, and the module 52 provides a negative, zero or positive voltage in the case of each second sub-converter 39.

The capacitor 56 of the module 52 is bypassed when the switching elements 54 in the module 52 are configured to form a short circuit in the module 52. This causes current in the chain-link converter to pass through the short circuit and bypass the capacitor 56, and so the module 52 provides a zero voltage, i.e. the module 52 is configured in a bypassed mode.

The capacitor 56 of the module 52 is inserted into the chain-link converter when the switching elements 54 in the module 52 are configured to allow the current in the chain-link converter to flow into and out of the capacitor 56. The capacitor 56 then charges or discharges its stored energy so as to provide a non-zero voltage, i.e. the module 52 is configured in a non-bypassed mode.

It is envisaged that, in other embodiments of the invention, each module may be replaced by another type of module that includes at least one switching element and at least one energy storage device, the or each switching element and the or each energy storage device in the or each module arranged to be combinable to selectively provide a voltage source.

The structure of the chain-link converter permits build-up of a combined voltage across the chain-link converter, which is higher than the voltage available from each of its individual modules 52, via the insertion of the energy storage devices 56 of multiple modules 52, each providing its own voltage, into the chain-link converter. In this manner switching of each switching element 54 in each module 52 causes the chain-link converter to provide a stepped variable voltage source, which permits the generation of a voltage waveform across the chain-link converter using a step-wise approximation. As such each chain-link converter is capable of providing a wide range of complex voltage waveforms.

The parallel connection of the first sub-converter 38 and electrical block in each limb permits the first sub-converter 38 to selectively act as a waveform synthesizer to modify a first DC voltage that is presented to the DC network.

The series connection of the second sub-converter 39 and phase element 36 in each limb permits the second sub-converter 39 to selectively act as a waveform synthesizer to modify a second DC voltage at a DC side of the corresponding phase element 36. Such modification of the second DC voltage at the DC side of the corresponding phase element 36 results in a corresponding modification of the AC side voltage at the AC side 42 of the corresponding phase element 36.

It is envisaged that, in other embodiments of the invention, the configuration of each first sub-converter may vary as long as each first sub-converter is capable of selectively acting as a waveform synthesizer to modify the respective first DC voltage, and the configuration of each second sub-converter may vary as long as each second sub-converter is capable of selectively acting as a waveform synthesizer to modify the respective second DC voltage.

The voltage source converter 30 further includes a controller 60 configured to control the phase element 36 and the first and second sub-converters 38,39.

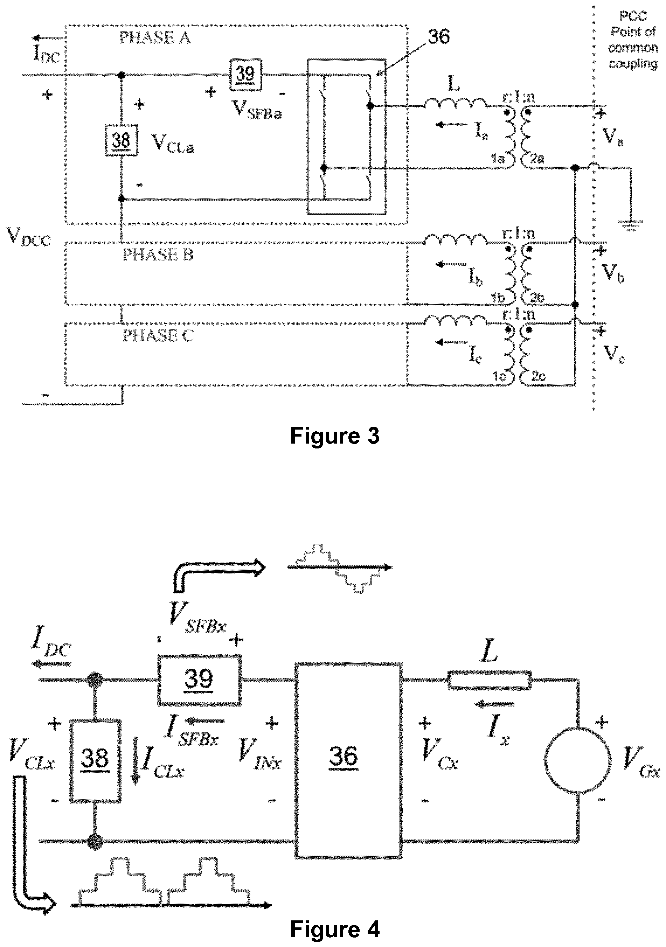

Operation of the voltage source converter 30 is described as follows, with reference to Figures 3 to 18.

Where applicable, the operation of the voltage source converter 30 has been described with reference to phase *a* of the three phases *a,b,c*, and it will be understood that such description applies mutatis mutandis to the other two phases *b,c* unless specified otherwise.

Figure 3 shows schematically an electrical circuit representing the voltage source converter 30. Figure 4 shows schematically an electrical circuit representing each limb of the voltage converter 30.

When the voltage source converter 30 is exchanging a generic power P,Q with the AC network 50 at the point of common coupling under balanced AC side voltage conditions (i.e. only positive sequence components are present in the AC side voltages), phase *a* of the voltage source converter 30 can be described, with reference to Figure 4, by:

$$V_{Ga}(t) = V_G \cos(\omega t), \qquad V_{Ca}(t) = V_C \cos(\omega t + \delta), \qquad I_a(t) = I \cos(\omega t + \varphi)$$

Where $V_{Ga}$ is the voltage of the Thevenin's equivalent of the secondary side of the transformer as seen from the AC side 42 of the phase element 36;

$V_G$ is the peak voltage value of $V_{Ga}$;

$V_{Ca}$ is the AC side voltage at the AC side 42 of the phase element 36.

Vc is the peak voltage value of Vca;

$I_a$ is the phase current flowing at the AC side 42 of the phase element 36;

I is the peak current value of $I_a$;

After rectification of $V_{Ca}$ by the phase element 36, the second DC voltage $V_{INa}$ is obtained as:

$$V_{INa}(t) = V_{CLa}(t) + V_{SFBa}(t) = V_C \left| \cos(\omega t + \delta) \right|$$

Where $V_{CLa}$ is the voltage waveform synthesized by the first sub-converter 38, which is also the first DC voltage;

$V_{SFBa}$ is the voltage waveform synthesized by the second sub-converter 39.

The first DC voltages sum to the DC voltage across the first and second DC terminals 32,34. If $V_{DCC}$ is the DC voltage across the first and second DC terminals 32,34 that leads to a balance between the total DC and AC powers exchanged by the voltage source converter 30 with the DC and AC networks respectively (i.e. $P_{DC}=P_{AC}$) and the AC side voltages are balanced, 1/3 of the total AC power is exchanged by each limb with the respective phase of the AC network 50. Hence, each first sub-converter 38 is required to synthesize 1/3 $V_{DCC}$ as follows:

$$V_{CL} = \frac{\pi}{6} V_{DCC} \rightarrow V_{CLa}(t) = V_{CL} \left| \cos(\omega t + \delta) \right|$$

Hence, under balanced AC side voltage conditions, the internal power balance in each limb can be maintained by splitting the total AC and DC powers equally between the three phases such that the AC and DC side powers for each limb are equal (neglecting losses).

According to the previous equation, over the three phases, the sum of the first DC voltages is equal to $V_{DCC}+V_R(t)$, where $V_R$ is a 6n harmonic ripple. It is possible to operate each second sub-converter 39 to synthesize 1/3 of $V_R$ to filter the harmonic ripple so that the DC voltage across the first and second DC terminals 32,34 is ripple-free, without affecting the AC voltage quality.

In conclusion, $V_{CLa}(t)$ and $V_{SFBa}(t)$ are synthesized by the respective sub-converters 38,39 as follows:

$$V_{CLa}(t) = V_{CL} \left| \cos(\omega t + \delta) \right| - \frac{1}{3} V_R(t) \quad V_{SFBa}(t) = (V_C - V_{CL}) \left| \cos(\omega t + \delta) \right| + \frac{1}{3} V_R(t)$$

Defining the currents through the first and second sub-converters 38,39 as $I_{CLa}(t) = I_{SFBa}(t) - I_{DC}$ and $I_{SFBa}(t) = I_a(t)sign(V_{Ca}(t))$, the average power absorbed by the first and second sub-converters 38,39 can be derived to be equal and opposite as follows:

$$\overline{P}_{CLa} = -\frac{V_{DCC}I_{DC}}{3} + \frac{\pi V_{DCC}I}{12} \cos(\delta - \varphi) = -\overline{P}_{SFBa}$$

Where $\overline{P}_{CLa}$ is the average power absorbed by the first sub-converter 38;

$\overline{P}_{SFBa}$ is the average power absorbed by the second sub-converter 39;

$I_{DC}$ is the current flowing in the DC network 58.

The average powers absorbed by the first and second sub-converters 38,39 are typically different from zero. It is therefore desirable to regulate the energy stored in the capacitors 56 of the first and second sub-converters 38,39, thereby obviating the problems associated with a deviation of the energy level of at least one capacitor from the reference value.

One way of regulating the energy stored in the capacitors 56 of the first and second sub-converters 38,39 is by transferring power between the first and second sub-converters 38,39 to reduce the average powers absorbed by the first and second sub-converters 38,39, preferably down to zero. To achieve an internal power balance between the first and second sub-converters 38,39, power may be transferred between the first and second sub-converters 38,39 by operating the first sub-converter 38 to synthesize a first 2nd harmonic voltage component, and operating the second sub-converter 39 to synthesize a second 2nd harmonic voltage component that is in anti-phase with the first 2nd harmonic voltage component.

Both of the first and second voltage components are in-phase with a common current flowing through the first and second sub-converters 38,39, and thereby interact with the common current to generate respective power contributions with opposite signs. Instead of the 2nd harmonic voltage component, each sub-converter 38,39 may synthesize a different 2nd harmonic voltage component, multiple 2nd harmonic voltage components, or at least one other harmonic voltage component.

Hence, the voltage waveforms synthesized by the first and second sub-converters 38,39 can be rewritten as:

$$V_{CLa}(t) = V_{CL}\left|\cos(\omega t + \delta)\right| - \frac{1}{3}V_R(t) + K_{EM}\mathrm{I}_{\mathrm{SFBa}}^{2\omega}$$

$$V_{SFBa}(t) = \left(V_C - V_{CL}\right)\left|\cos(\omega t + \delta)\right| + \frac{1}{3}V_R(t) - K_{EM}\mathrm{I}_{\mathrm{SFBa}}^{2\omega}$$

Where $K_{EM}$ is a "virtual" resistor that can be controlled to ensure optimum power balance.

Under balanced AC side voltage conditions, the three second 2nd harmonic voltage components are 120° phase shifted such that they sum to zero between the first and second DC terminals 32,34, thereby preventing resultant ripple from appearing in the DC network.

In practice, negative and/or zero sequence components may be present in the AC network 50, which leads to an imbalance between the AC side voltages. Under unbalanced AC side voltage conditions, the internal power balance in each limb must be controlled to ensure that regulation of the energy levels of the first and second sub-converters 38,39 remains effective, and that regulating the energy stored in the capacitors 56 of the first and second sub-converters 38,39 cam result in the synthesis of different 2nd harmonic voltage components per phase, leading to 2nd harmonic voltage ripple in the DC network 58.

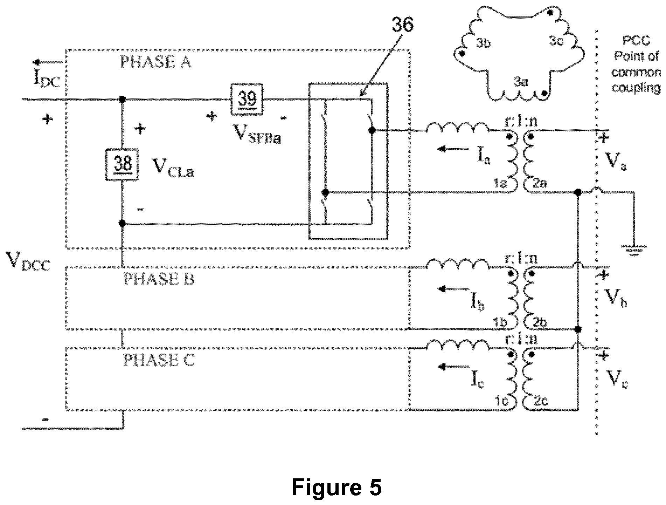

The way negative and zero sequence components in the AC network voltages (shown as voltages $V_a$, $V_b$ and $V_c$ in Figure 3) are reflected from the transformer primary windings 46 to the transformer secondary windings 44 (shown as voltage $V_{Gx}$ in Figure 4) depends on the configuration of the transformer arrangement. To illustrate the working of the invention, two non-limiting exemplary configurations of the transformer arrangement are considered, with the first configuration of the transformer arrangement as shown in Figures 1 and 3, and with the second configuration of the transformer arrangement as shown in Figure 5 that is identical to the first configuration but with the addition of a transformer tertiary delta winding. The addition of the transformer tertiary delta winding, in principle, prevents the transfer of zero sequence current components between the transformer primary and secondary windings, as described later in this specification.

For the sake of generality, let us consider the generic phase of the voltage source converter 30 in which the transformer arrangement and the AC network 50 are replaced by the equivalent voltage source $V_{Gx}$, where x = a,b,c.

Considering that $V_{Gx}$ can include positive, negative and zero sequence components, it can be written in terms of complex phasors as:

$$V_G = \begin{bmatrix} 1 \\ a \\ a^2 \end{bmatrix} V_P + \begin{bmatrix} b \\ a^{-1}b \\ a^{-2}b \end{bmatrix} V_N + \begin{bmatrix} z \\ z \\ z \end{bmatrix} V_Z \quad \begin{matrix} a = e^{-j\frac{2}{3}\pi} \\ b = e^{j\vartheta_N} \\ c = e^{j\vartheta_Z} \end{matrix}$$

Where $\theta_N$ and $\theta_Z$ are the phases of phase $a$ of the negative and the zero sequence components with respect to phase $a$ of the positive sequence component, which is taken as the reference for the complex phasors representation. The amplitude of the complex phasors is the RMS value of the voltage components.

Similarly, a generalised expression of the phase currents flowing in the AC sides 42 of the phase elements 36 of the voltage source converter 30 can be written as:

$$I = \begin{bmatrix} 1c \\ ac \\ a^2c \end{bmatrix} I_P + \begin{bmatrix} bd \\ a^{-1}bd \\ a^{-2}bd \end{bmatrix} I_N + \begin{bmatrix} zg \\ zg \\ zg \end{bmatrix} I_Z \quad \begin{matrix} c = e^{j\varphi_P} \\ d = e^{j\varphi_N} \\ g = e^{j\varphi_Z} \end{matrix}$$

Where $\varphi_P$, $\varphi_N$ and $\varphi_Z$ are the phases of the positive, negative and zero sequence currents with respect to the corresponding voltages. The amplitude of the complex phasors is the RMS value of the current components.

From the above generalised representations of voltages and currents, the complex powers for the three phases $a$, $b$, and $c$ can be calculated. The sign convention is as shown in Figure 4. Active power $P_x$ is assumed positive when the voltage source converter 30 absorbs power from the AC network 50, and is assumed negative when the voltage source converter 30 injects power into the AC network 50. The reactive power $Q_x$ is assumed positive when the voltage source converter 30 is capacitive, and is assumed negative when the voltage source converter 30 is inductive. Based on these assumptions, the complex powers can be written as (where x* represents the complex conjugate of x):

$$
\begin{aligned}
P_a - jQ_a = V_{Ga}I_a^* = \; & \mathbf{V_P I_P c^{-1}} \quad + V_P I_N b^{-1}d^{-1} + V_P I_Z g^{-1}z^{-1} + \\
& V_N I_P bc^{-1} + \mathbf{V_N I_N d^{-1}} \quad + V_N I_Z bg^{-1}z^{-1} + \\
& V_Z I_P zc^{-1} + V_Z I_N zb^{-1}d^{-1} + \mathbf{V_Z I_Z g^{-1}}
\end{aligned}
$$

$$
\begin{aligned}
P_b - jQ_b = V_{Gb}I_b^* = \; & \mathbf{V_P I_P c^{-1}} \quad\quad + V_P I_N b^{-1}d^{-1}a^2 + V_P I_Z g^{-1}z^{-1}a + \\
& V_N I_P bc^{-1}a^{-2} + \mathbf{V_N I_N d^{-1}} \quad\quad + V_N I_Z bg^{-1}z^{-1}a^{-1} + \\
& V_Z I_P zc^{-1}a^{-1} + V_Z I_N zb^{-1}d^{-1}a \quad + \mathbf{V_Z I_Z g^{-1}}
\end{aligned}
$$

$$
\begin{aligned}
P_c - jQ_c = V_{Gc}I_c^* = \; & \mathbf{V_P I_P c^{-1}} \quad\quad + V_P I_N b^{-1}d^{-1}a^4 + V_P I_Z g^{-1}z^{-1}a^2 + \\
& V_N I_P bc^{-1}a^{-4} + \mathbf{V_N I_N d^{-1}} \quad\quad + V_N I_Z bg^{-1}z^{-1}a^{-2} + \\
& V_Z I_P zc^{-1}a^{-2} + V_Z I_N zb^{-1}d^{-1}a^2 + \mathbf{V_Z I_Z g^{-1}}
\end{aligned}
$$

In the equations, the power terms common between the three phases (highlighted in bold) are generated by the interaction of voltage and current sequences of the same kind. The other terms are called cross-coupling terms, and represent active and reactive power components due to cross-sequence interaction between currents and voltages. These cross-coupling power terms can be rewritten as follows:

$$P_{aCC} - jQ_{aCC} = V_P I_N b^{-1}d^{-1} + V_P I_Z g^{-1}z^{-1} + V_N I_P bc^{-1} + V_N I_Z bg^{-1}z^{-1} + V_Z I_P zc^{-1} + V_Z I_N zb^{-1}d^{-1}$$

$$P_{bCC} - jQ_{bCC} = V_P I_N b^{-1} d^{-1} a^2 + V_P I_Z g^{-1} z^{-1} a + V_N I_P bc^{-1} a^{-2} + V_N I_Z bg^{-1} z^{-1} a^{-1} + V_Z I_P zc^{-1} a^{-1} + V_Z I_N zb^{-1} d^{-1} a$$

$$P_{cCC} - jQ_{cCC} = V_P I_N b^{-1} d^{-1} a^4 + V_P I_Z g^{-1} z^{-1} a^2 + V_N I_P bc^{-1} a^{-4} + V_N I_Z bg^{-1} z^{-1} a^{-2} + V_Z I_P zc^{-1} a^{-2} + V_Z I_N zb^{-1} d^{-1} a^2$$

The three cross-coupling power terms sum to zero across the three phases of the voltage source converter 30 as follows:

$$\sum_{x=a,b,c} \left( P_{xCC} - jQ_{xCC} \right) = 0$$

The foregoing equations illustrate the relationship between the current sequence components, the voltage sequence components and the powers in each phase of the voltage source converter 30.

Considering now the actual operation of the voltage source converter 30, the sequence voltage components of the AC network voltages will be imposed by the AC network conditions and by the design of the transformer arrangement. In turn the phase currents must be defined and controlled by the voltage source converter 30 in order to guarantee sustainable operation under unbalanced AC voltage conditions.

Mathematically, this means that the amplitudes and phases of the three sequence current components must be defined based on appropriate constraints that enable the effective regulation of the voltage source converter 30. In the general analysis presented so far, there are 6 unknowns that must be defined (i.e. three amplitudes and three phases for the three sequence current components), which requires the definition of 6 constraints equations. Considering that the primary objective of the voltage source converter 30 is to exchange with the AC network 50 a given amount of total AC active power $P_{TOT}$ and total AC reactive power $Q_{TOT}$ over the three phases, the first two equations can be given as:

$$P_{TOT} = 3V_P I_P \cos(\varphi_P) + 3V_N I_N \cos(\varphi_N) + 3V_Z I_Z \cos(\varphi_Z)$$

$$Q_{TOT} = -3V_P I_P \sin(\varphi_P) - 3V_N I_N \sin(\varphi_N) - 3V_Z I_Z \sin(\varphi_Z)$$

The second two equations are based on the observation that the AC active power exchanged by each of the three phases is a fundamental parameter in the operation of the voltage source converter 30. This is because the choice of the distribution of the total AC active power between the AC sides 42 of the phase elements 36 influences the distribution of the total DC power between the three limbs. By guaranteeing that the AC side power exchanged by each limb with the AC network 50 matches the corresponding DC side power exchanged by each limb with the DC network 58, internal power balance in each limb of the voltage source converter 30 can be achieved, thus enabling effective energy regulation of the capacitors 56 of the limbs during the operation of the of the voltage source converter 30.

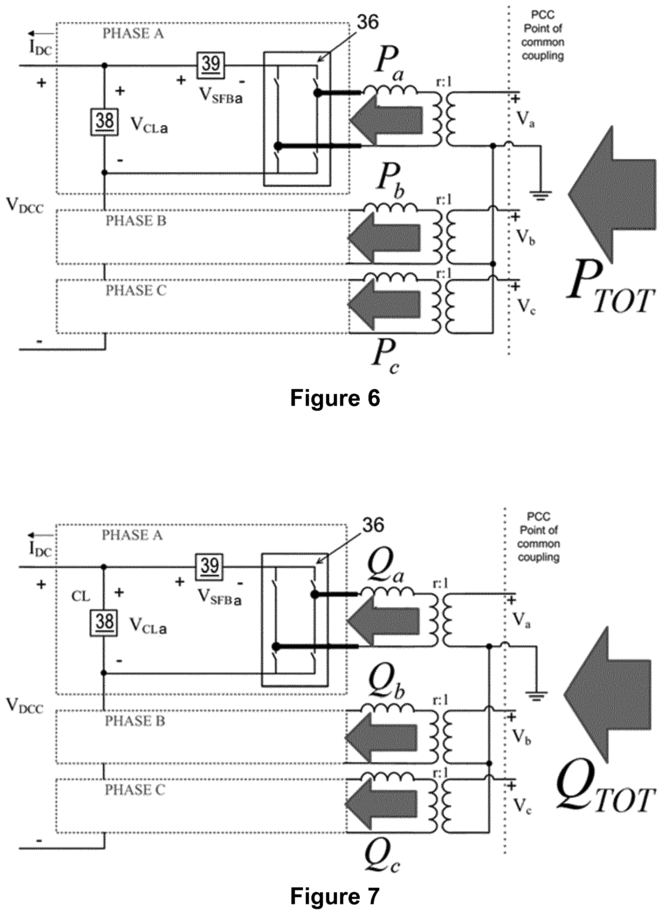

The distribution of the total AC active power between the AC sides 42 of the phase elements 36 can be given by two equations in which two of the cross-coupling AC side active powers are imposed to be equal to a given value. Without loss of generality, phases *a* and *b* are considered, and the values of the two powers are imposed to be ($K_{xP}$-1/3)$P_{TOT}$, for generality, where x can be x = a,b and $K_{xP}$ can assume any desired value. The choice of $K_{xP}$ ultimately determines the AC side active power exchanged by two of the three limbs with the AC network 50, with the AC side active power exchanged by the third limb being imposed by the total power requirements of the three phases. As a result, an arbitrary share of the total active power can be achieved, as depicted in Figure 6.

As an example, consider the case where $K_{aP}$=$K_{bP}$=1/3. In this case the cross-coupling terms would be set to zero and all the three phases will exchange exactly the same AC side power. In terms of equations, this is given by:

$$P_{aCC} = V_P I_N \cos(\vartheta_N + \varphi_N) + V_P I_Z \cos(\vartheta_Z + \varphi_Z) + V_N I_P \cos(\vartheta_N - \varphi_P) + V_N I_Z \cos(\vartheta_Z + \varphi_Z - \vartheta_N)$$
$$+ V_Z I_P \cos(\vartheta_Z - \varphi_P) + V_Z I_N \cos(\vartheta_Z - \vartheta_N - \varphi_N) = \left( K_{aP} - \frac{1}{3} \right) P_{TOT}$$

$$P_{bCC} = V_P I_N \cos(\vartheta_N + \varphi_N + (4/3)\pi) + V_P I_Z \cos(\vartheta_Z + \varphi_Z + (2/3)\pi) + V_N I_P \cos(\vartheta_N - \varphi_P + (4/3)\pi) +$$

$$V_N I_Z \cos(\vartheta_Z + \varphi_Z - \vartheta_N - (2/3)\pi) + V_Z I_P \cos(\vartheta_Z - \varphi_P + (2/3)\pi) + V_Z I_N \cos(\vartheta_Z - \vartheta_N - \varphi_N - (2/3)\pi) =$$

$$= \left( K_{bP} - \frac{1}{3} \right) P_{TOT}$$

A further two equations can be defined to permit the possible use of all the degrees of freedom given by the circulation of different current sequence components in the voltage source converter 30.

The further two constraint equations can be related to the distribution of AC side reactive powers exchanged by the respective limbs with the AC network 50. Similarly to control of the ratio of the AC side active powers of the three phases, two values of AC side reactive power can be imposed to a given value, with the third AC side reactive power being determined by the total AC reactive power $Q_{TOT}$ demanded of the voltage source converter 30. Without loss of generality, the equations are written as follows to impose the constraints on the cross-coupling reactive power terms on phase $a$ and $b$ such that they are imposed to be equal to $(K_{xQ}-1/3)Q_{TOT}$, where x = a,b, as depicted in Figure 7.

$$-Q_{aCC} = V_P I_N \sin(-\vartheta_N - \varphi_N) + V_P I_Z \sin(-\vartheta_Z - \varphi_Z) + V_N I_P \sin(\vartheta_N - \varphi_P) + V_N I_Z \sin(-\vartheta_Z - \varphi_Z + \vartheta_N)$$

$$+ V_Z I_P \sin(\vartheta_Z - \varphi_P) + V_Z I_N \sin(\vartheta_Z - \vartheta_N - \varphi_N) = -\left( K_{aQ} - \frac{1}{3} \right) Q_{TOT}$$

$$-Q_{bCC} = V_P I_N \sin(-\vartheta_N - \varphi_N - (4/3)\pi) + V_P I_Z \sin(-\vartheta_Z - \varphi_Z - (2/3)\pi) + V_N I_P \sin(\vartheta_N - \varphi_P + (4/3)\pi) +$$

$$V_N I_Z \sin(-\vartheta_Z - \varphi_Z + \vartheta_N + (2/3)\pi) + V_Z I_P \sin(\vartheta_Z - \varphi_P + (2/3)\pi) + V_Z I_N \sin(\vartheta_Z - \vartheta_N - \varphi_N - (2/3)\pi) =$$

$$= -\left( K_{bQ} - \frac{1}{3} \right) Q_{TOT}$$

Controlling the ratio of the AC side reactive powers on a per-phase basis enables the voltage source converter 30 to provide a more effective voltage support to the AC network 50 in the event of voltage depressions or rises. In particular, the voltage source converter 30 is enabled to control the distribution of the total AC reactive power $Q_{TOT}$ among the different phases in a way that provides independent control over the AC side reactive power in each phase, which in turn enables control of the magnitude of each phase voltage separately in order to address different levels of voltage depression or rise in the phases. In an exemplary scenario in which a phase experiences a larger voltage drop when compared to the other phases, the voltage source converter 30 is able to control the ratio of the AC side reactive powers on a per-phase basis to inject more reactive power in the phase experiencing a larger voltage drop.

Calculating the amplitude and phases of the three sequence current components of the phase currents using the above equations ensures that the total AC active and reactive power requirements are met, and that it is possible to arbitrarily define the ratio of the AC side active and reactive powers between the three phases.

Alternatively the further two equations can be related to the control of the total pulsation at $2\omega$ where $\omega=2\pi f[rad/s]$ and f is the AC network frequency appearing in the instantaneous power exchanged by the voltage source converter 30 with the AC network 50.

Instead of controlling the ratio of the AC side reactive powers of the three phases, the AC component of the instantaneous power exchanged by the voltage source converter 30 with the AC network 50 is controlled. This does not affect the total active power, but can beneficially reduce energy oscillations in the capacitors 56 of the limbs, thus permitting the use of smaller capacitors 56 for the same nominal ripple.

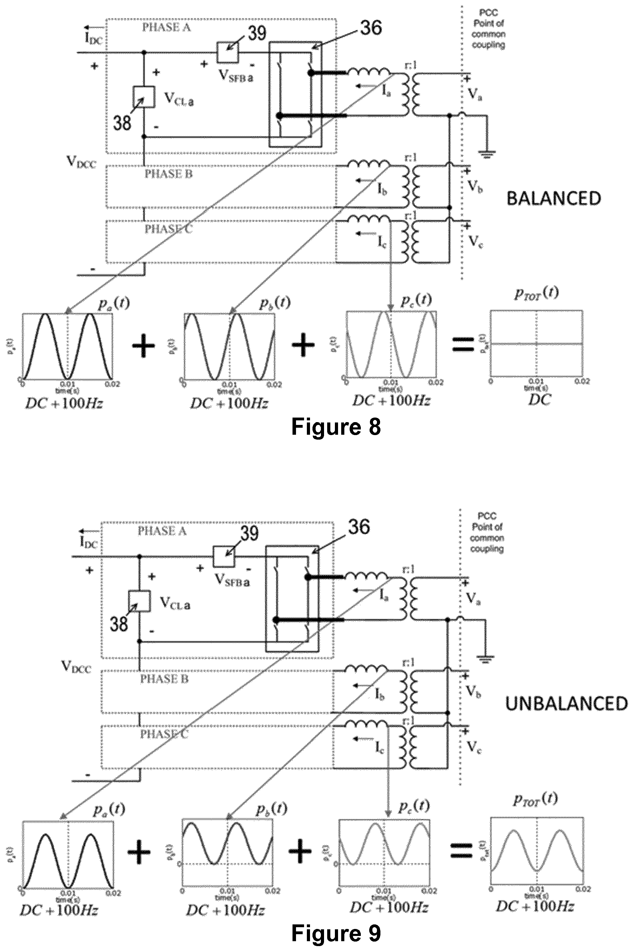

Under balanced AC side voltage conditions, the sum of the instantaneous powers exchanged by the three limbs with the AC network 50 is constant. When calculating the instantaneous power per limb, the product between 50Hz current and 50Hz voltage will generate a DC term plus an AC component at 100Hz. Under balanced AC side voltage conditions, the 100Hz components will cancel each other out when the three instantaneous powers are added together. On the other hand, under unbalanced AC side voltage conditions, the 100Hz components will generally not cancel each other out, causing a 100Hz power oscillation component to appear on the instantaneous power exchanged by the voltage source converter 30 with the AC network 50. This is illustrated in Figures 8 and 9, where the balanced case is shown in Figure 8 and the unbalanced case is shown in Figure 9.

The power oscillation component of the instantaneous power at $2\omega$ can be written as:

$$P_{2\omega} = \sum_{a,b,c} V_{Gx} I_x = 3V_P I_N bd + 3V_N I_P bc + 3V_Z I_Z gz^2$$

Consider the case where it is desirable to completely cancel the 2ω component of the total instantaneous power, i.e. the total AC power exchanged by the voltage source converter 30 with the AC network 50 is constant. In this case, the two further equations can be derived by imposing the real part and the imaginary part of the phasor representing the instantaneous power oscillation component to zero as follows:

$$V_P I_N \cos(\vartheta_N + \varphi_N) + V_N I_P \cos(\vartheta_N + \varphi_P) + V_Z I_Z \cos(2\vartheta_Z + \varphi_Z) = 0$$

$$V_P I_N \sin(\vartheta_N + \varphi_N) + V_N I_P \sin(\vartheta_N + \varphi_P) + V_Z I_Z \sin(2\vartheta_Z + \varphi_Z) = 0$$

The six equations sets out the relationship between the current and voltage sequence components of the voltage source converter 30, assuming that all the positive, negative and zero sequence components were present at the same time in the AC side voltages and the phase currents. Using these six equations, an energy management mode of the voltage source converter 30 under unbalanced AC side voltage conditions can be defined in further detail.

During the operation of the voltage source converter 30, zero sequence current components and zero sequence voltage components cannot be present at the same time. When the voltage source converter 30 is configured with the first configuration of the transformer arrangement of Figure 3, the presence of zero sequence voltage components in the AC network voltage must be counteracted by the voltage source converter 30 with the same zero sequence voltage components at its AC terminals. This ensures that the zero sequence components in the phase currents are equal to zero, thus preventing any current from flowing through the ground connection of the primary transformer windings 46. Therefore, if $V_{Gx}$ has a zero sequence voltage component, the corresponding AC side voltage $V_{Cx}$ will have the same zero sequence voltage component to guarantee that the zero sequence current component of the phase current I is equal to zero.

On the other hand, when the voltage source converter 30 is configured with the first configuration of the transformer arrangement of Figure 5, the transformer tertiary delta winding acts as a sink for the zero sequence voltage components in the AC network voltages so that the zero sequence voltage components do not appear in the transformer secondary windings 44. Similarly, any zero sequence current component generated by the voltage source converter 30 will be shunted by the transformer tertiary delta winding, thus preventing the zero sequence current component from flowing through the ground connection of the primary transformer windings 46. In this case, when there is an imbalance between the AC network voltages the voltage source converter 30 would only see negative sequence voltage components reflected onto the transformer secondary windings 44, and also it is possible to circulate zero sequence current components in the phase current without adversely affecting the AC network 50.

The following modes of operation of the voltage source converter 30 under unbalanced AC side voltage conditions are described with reference to the first configuration of the transformer arrangement as shown in Figure 3, and with reference to the six equations describing the relationship between the current and voltage sequence components of the voltage source converter 30.

Since the first configuration of the transformer arrangement requires the zero sequence current component to be set to zero, the number of controllable variables is only 4, i.e. only the amplitudes and phases of the positive and negative sequence current components of the phase currents can be used as degrees of freedom to enable the operation of the voltage source converter 30 under unbalanced AC side voltage conditions.

In a first case, if priority is given to the total AC active and reactive power exchanged by the voltage source converter 30 with the AC network 50 and to the control of the ratio of the AC side active powers exchanged by the respective limbs with the AC network 50, the equations relating to the control of the ratio of the AC side reactive powers and the cancellation of the 2ω component of the instantaneous power can be ignored. The corresponding set of equations for the first case becomes:

$$P_{TOT} = 3V_P I_P \cos(\varphi_P) + 3V_N I_N \cos(\varphi_N)$$

$$Q_{TOT} = -3V_P I_P \sin(\varphi_P) - 3V_N I_N \sin(\varphi_N)$$

$$P_{aCC} = V_P I_N \cos(\vartheta_N + \varphi_N) + V_N I_P \cos(\vartheta_N - \varphi_P) + V_Z I_P \cos(\vartheta_Z - \varphi_P)$$

$$+ V_Z I_N \cos(\vartheta_Z - \vartheta_N - \varphi_N) = \left( K_{aP} - \frac{1}{3} \right) P_{TOT}$$

$$P_{bCC} = V_P I_N \cos(\vartheta_N + \varphi_N + (4/3)\pi) + V_N I_P \cos(\vartheta_N - \varphi_P + (4/3)\pi) + V_Z I_P \cos(\vartheta_Z - \varphi_P + (2/3)\pi) +$$

$$V_Z I_N \cos(\vartheta_Z - \vartheta_N - \varphi_N - (2/3)\pi) = \left( K_{bP} - \frac{1}{3} \right) P_{TOT}$$

Instead, in a second case, if priority is given to the total AC active and reactive power exchanged by the voltage source converter 30 with the AC network 50 and to the cancellation of the 2ω component of the instantaneous power, the two equations relating to the control of the ratio of the AC side active powers can be replaced by the equations relating to the cancellation of the 2ω component of the instantaneous power as follows:

$$P_{TOT} = 3 V_P I_P \cos(\varphi_P) + 3 V_N I_N \cos(\varphi_N)$$

$$Q_{TOT} = -3 V_P I_P \sin(\varphi_P) - 3 V_N I_N \sin(\varphi_N)$$

$$V_P I_N \cos(\vartheta_N + \varphi_N) + V_N I_P \cos(\vartheta_N + \varphi_P) = 0$$

$$V_P I_N \sin(\vartheta_N + \varphi_N) + V_N I_P \sin(\vartheta_N + \varphi_P) = 0$$

In the second case, the AC side power distribution between the phases is not controllable, and the exact distribution of the AC side powers between the phases will depend on the specific level of imbalance between the AC side voltages and on the P,Q operating point of the voltage source converter 30.

In a third case, if priority is given to the total AC active and reactive power exchanged by the voltage source converter 30 with the AC network 50 and to the control of the ratio of the AC side reactive powers exchanged by the respective limbs with the AC network 50, the two equations relating to the control of the ratio of the AC side active powers can be replaced by the equations relating to the control of the ratio of the AC side reactive powers as follows:

$$P_{TOT} = 3 V_P I_P \cos(\varphi_P) + 3 V_N I_N \cos(\varphi_N)$$

$$Q_{TOT} = -3 V_P I_P \sin(\varphi_P) - 3 V_N I_N \sin(\varphi_N)$$

$$-Q_{aCC} = V_P I_N \sin(-\vartheta_N - \varphi_N) + V_N I_P \sin(\vartheta_N - \varphi_P)$$

$$+ V_Z I_P \sin(\vartheta_Z - \varphi_P) + V_Z I_N \sin(\vartheta_Z - \vartheta_N - \varphi_N) = -\left( K_{aQ} - \frac{1}{3} \right) Q_{TOT}$$

$$-Q_{bCC} = V_P I_N \sin(-\vartheta_N - \varphi_N - (4/3)\pi) + V_N I_P \sin(\vartheta_N - \varphi_P + (4/3)\pi) +$$

$$+ V_Z I_P \sin(\vartheta_Z - \varphi_P + (2/3)\pi) + V_Z I_N \sin(\vartheta_Z - \vartheta_N - \varphi_N - (2/3)\pi) =$$

$$= -\left( K_{bQ} - \frac{1}{3} \right) Q_{TOT}$$

From the first, second and third case, it can be observed that the controlled variables are the amplitudes and phases of the positive and negative sequence components of the phase currents.

In a fourth case, it is possible to further simplify the operation of the voltage source converter 30 to reduce the number of controlled variables to 2, which are the amplitudes and phases of the positive sequence current components of the phase currents, while the negative and zero sequence current components are set to zero. In this case, only the total AC active and reactive power exchanged by the voltage source converter 30 with the AC network 50 can be controlled. There is no control of the ratio of the AC side active powers, no control of the ratio of the AC side reactive powers, and no cancellation of the 2ω component of the instantaneous power. In the fourth case, the equations describing the voltage source converter 30 reduce here to:

$$ P_{TOT} = 3V_P I_P \cos(\varphi_P) $$

$$ Q_{TOT} = -3V_P I_P \sin(\varphi_P) $$

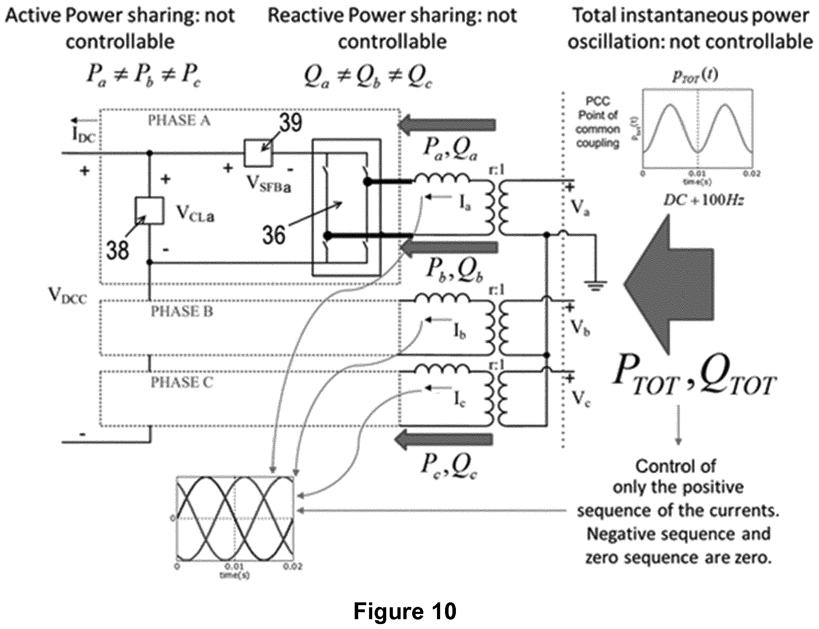

Four modes of operation under unbalanced AC side voltage conditions are possible for the voltage source converter 30 in respect of the first configuration of the transformer arrangement, and are described as follows with reference to Figures 10 to 13.

A first mode of operation illustrated in Figure 10 corresponds to the fourth case in which the negative and zero sequence current components of the phase currents are set to zero, and only the positive sequence current components of the phase currents are controlled to be different from zero so as to effect the exchange of total AC active and reactive power between the voltage source converter 30 and the AC network 50. There is no control of the ratio of the AC side active powers, no control of the ratio of the AC side reactive powers, and no cancellation of the 2ω component of the instantaneous power exchanged by the voltage source converter 30 with the AC network 50.

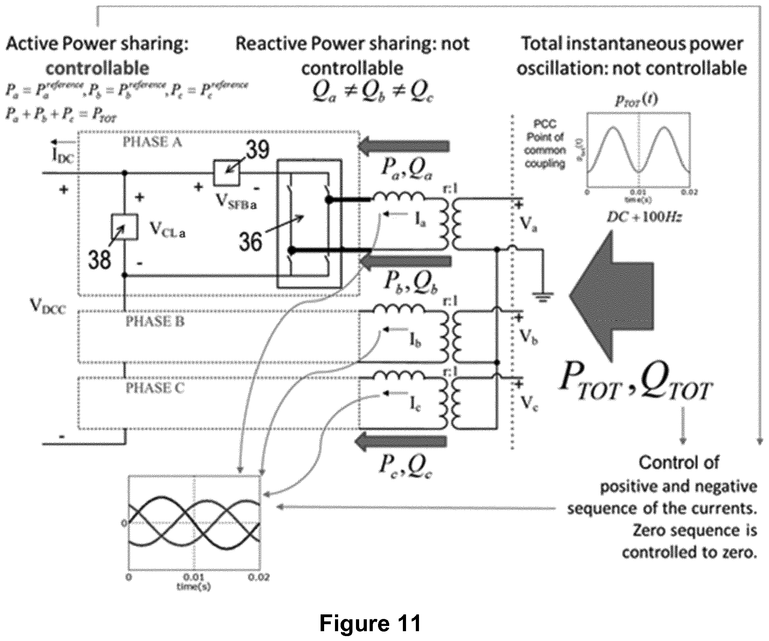

A second mode of operation illustrated in Figure 11 corresponds to the first case in which the zero sequence current components of the phase currents are set to zero, and only the negative and positive sequence current components of the phase currents are controlled to be different from zero so as to effect the exchange of total AC active and reactive power between the voltage source converter 30 and the AC network 50 and to control the ratio of the AC side active powers exchanged by the respective limbs with the AC network 50. There is no control of the ratio of the AC side reactive powers, and no cancellation of the 2ω component of the instantaneous power exchanged by the voltage source converter 30 with the AC network 50.

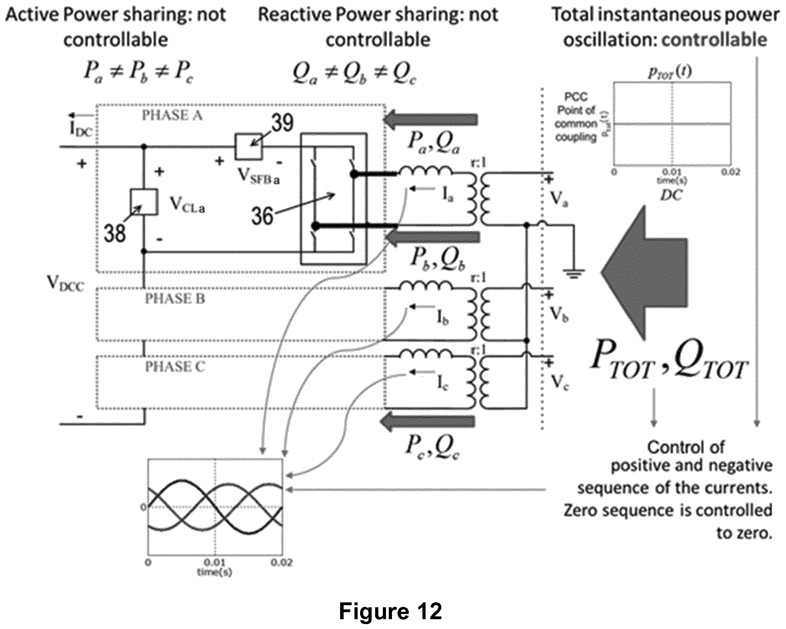

A third mode of operation illustrated in Figure 12 corresponds to the second case in which the zero sequence current components of the phase currents are set to zero, and only the negative and positive sequence current components of the phase currents are controlled to be different from zero so as to effect the exchange of total AC active and reactive power between the voltage source converter 30 and the AC network 50 and to cancel the 2ω component of the instantaneous power exchanged by the voltage source converter 30 with the AC network 50. There is no control of the ratio of the AC side active powers, and no control of the ratio of the AC side reactive powers.

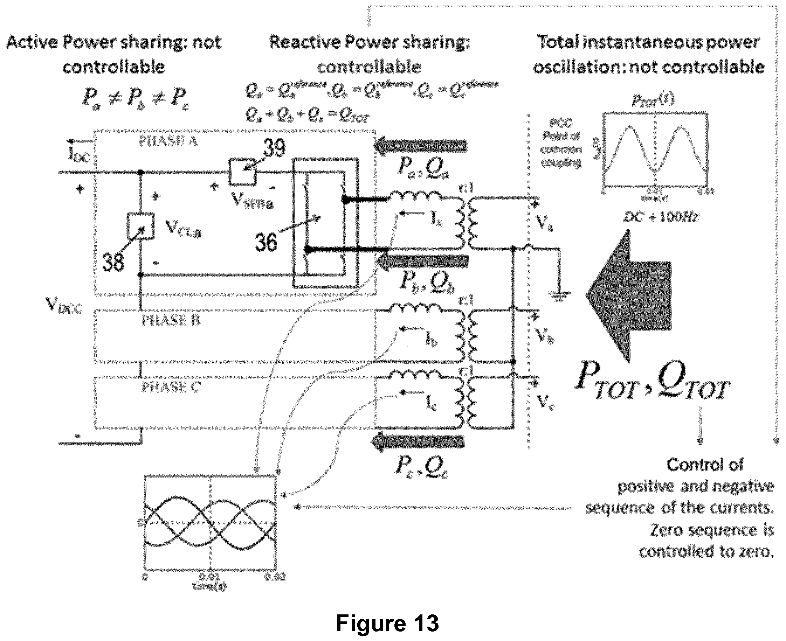

A fourth mode of operation illustrated in Figure 13 corresponds to the third case in which the zero sequence current components of the phase currents are set to zero, and only the negative and positive sequence current components of the phase currents are controlled to be different from zero so as to effect the exchange of total AC active and reactive power between the voltage source converter 30 and the AC network 50 and to control the ratio of the AC side reactive powers exchanged by the respective limbs with the AC network 50. There is no control of the ratio of the AC side active powers, and no cancellation of the 2ω component of the instantaneous power exchanged by the voltage source converter 30 with the AC network 50.

The first mode of operation is advantageous in that it gives minimum variation in terms of the operation of the voltage source converter 30 under balanced and unbalanced AC side voltage conditions. The second mode of operation is advantageous in that the ability to control the ratio of the AC side active powers makes it more straightforward to balance the AC and DC side powers exchanged by each limb with the AC and DC networks 50,58 respectively. The third mode of operation is advantageous in that minimising or cancelling a power oscillation component of the instantaneous power exchanged by the voltage source converter 30 with the AC network 50 reduces energy oscillations in the capacitors 56 of the limbs, thus permitting the use of smaller capacitors 56.

The different modes of operation result in different powers exchanged by the respective limb with the AC network 50. In any event, effective energy regulation of the capacitors 50 of the limbs is only possible by balancing the AC and DC side powers exchanged by each limb with the AC and DC networks 50,58 respectively so that a respective net change in energy stored in the energy storage devices of each limb is controlled to be zero or substantially zero.

To balance the AC and DC side powers exchanged by each limb with the AC and DC networks 50,58 respectively, the controller 60 in the energy management mode may either perform a first power balancing procedure by operating the first sub-converter 38 of each limb to modify the respective first DC voltage to control the DC side powers to match the asymmetry between the AC side powers, or perform a second power balancing procedure by operating each limb to modify the respective AC side voltage to control the AC side powers to match the symmetry between the DC side powers.

When the first power balancing procedure is combined with the first mode of operation, the AC side active powers exchanged by the respective limbs with the AC network 50 can be written as:

$$P_a = \frac{P_{TOT}}{3} + P_{aCC} \quad P_b = \frac{P_{TOT}}{3} + P_{bCC} \quad P_c = \frac{P_{TOT}}{3} + P_{cCC}$$

Since there is no control of the ratio of the AC side active powers in the first mode of operation, the AC side active powers are typically different due to the unbalanced AC side voltage conditions. Thus, it is necessary to modify the respective first DC voltage to control the DC side powers to match the asymmetry between the AC side powers. Assuming that the current $I_{DC}$ in the DC network 58 is purely DC and that the DC voltage across the first and second DC terminals 32,34 is $V_{DCC}$ so that $P_{TOT}=V_{DCC}I_{DC}$ (neglecting loss for simplicity), the DC side power per limb depends on the DC component of the voltage waveform synthesized by the corresponding second sub-converter 39. In order to ensure balance between the AC and DC side powers in each limb, the average value $\overline{V_{CLx}}$ of the CL voltage in phase x is determined as follows:

$$\overline{V_{CLx}} = V_{DCC}\frac{P_x}{P_{TOT}}$$

$$\sum_{a,b,c}\frac{P_x}{P_{TOT}} = 1$$

The total DC voltage is still equal to $V_{DCC}$, as .

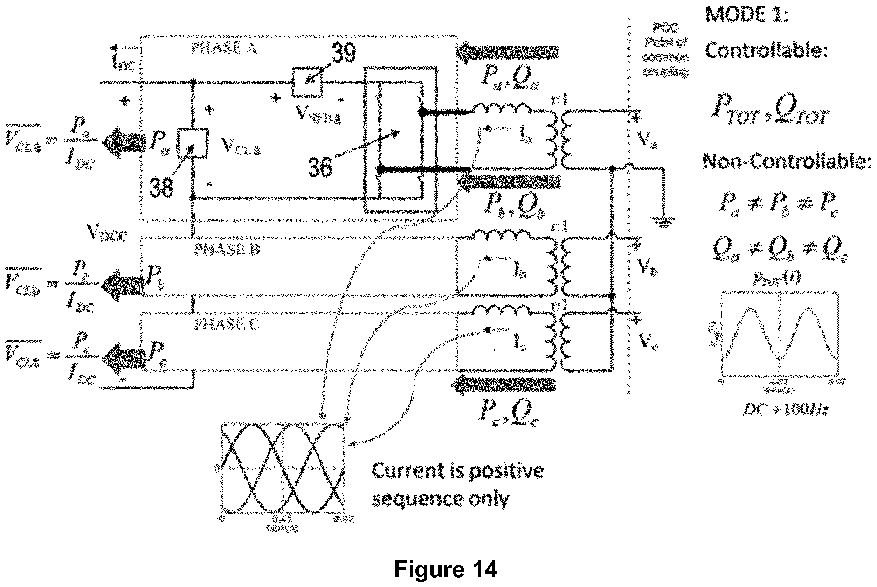

Hence, when the first power balancing procedure is combined with the first mode of operation, only positive sequence current components are exchanged between the voltage source converter 30 and the AC network 50 to achieve the desired total P and Q exchange. This leads to different AC side active powers, each of which must be matched by the corresponding DC side power by modifying the amplitude of the DC component of the voltage waveform synthesized by the corresponding first sub-converter 38. This is illustrated in Figure 14.

When the first power balancing procedure is combined with the third mode of operation, the amplitudes of the DC components of the voltage waveforms synthesized by the corresponding first sub-converters 38 must also be unbalanced to accommodate for the asymmetry of the AC side powers so as to ensure balance between the AC and DC side powers exchanged by each limb with the AC and DC networks 50,58 respectively.

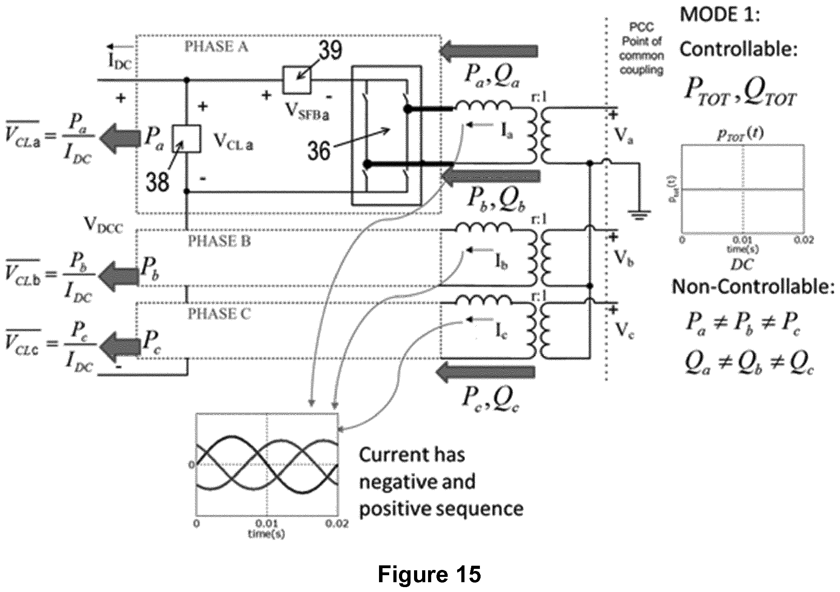

The modification of the amplitudes of the DC component of the voltage waveforms synthesized by the corresponding first sub-converters 38 for the combination of the first power balancing procedure and the third mode of operation is carried out in a similar manner to the modification of the amplitudes of the DC component of the voltage waveforms synthesized by the corresponding first sub-converters 38 for the combination of the first power balancing procedure and the first mode of operation. This is illustrated in Figure 15.

The first power balancing procedure provides a reliable solution for ensuring internal power balance in each limb of the voltage source converter 30 in order to enable effective energy regulation of the capacitors 56 of the limbs. However, the use of first power balancing procedure is limited to those operating points and levels of unbalance, i.e. amplitudes and phases of the negative and zero sequence voltage components, where all the per-phase powers $P_x$ have the same sign, because the DC side powers must have all the same sign. In fact, the current flowing through the first sub-converters 38 is common, and the voltages of the first sub-converters 38 are always positive. It can be shown that, for a given active power P and specific negative sequence and zero sequence voltage components, this translates into a maximum Q/P ratio at which the voltage source converter 30 with AC side powers all with the same sign. If the ratio is lower, the AC side powers all have the same sign which permits the use of first power balancing procedure. If the ratio is higher, the AC side powers for the limbs do not all have the same sign which prevents the use of first power balancing procedure.

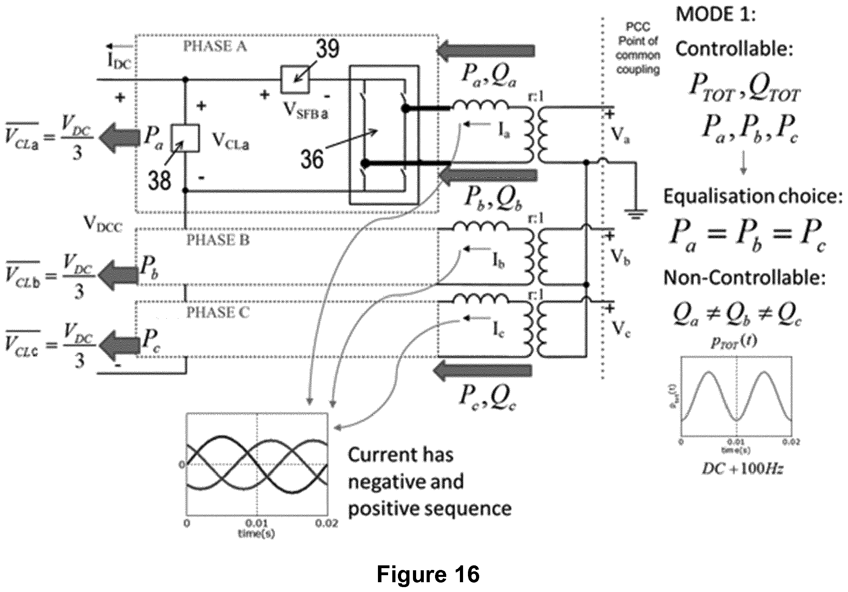

The limitations of the first power balancing procedure can be overcome by performing the second power balancing procedure. In this case, the DC components of the voltage waveforms synthesized by the first sub-converters 38 are fixed to 1/3 $V_{DCC}$, exactly like it is in the operation of the voltage source converter 30 under balanced AC side voltage conditions. This forces the symmetry between the DC side powers, i.e. $P_a = P_b = P_c$, which then requires a corresponding symmetry between the AC side powers. This is illustrated in Figure 16.

The symmetry in the AC side powers can be achieved by carrying out the second mode of operation. The amplitudes and phases of the negative sequence components can be selected to get zero per-phase power contribution from the cross-sequence power terms, i.e. the positive sequence voltage components interacting with the negative sequence current components, and the negative sequence voltage components interacting with the positive sequence current components. In the equations describing the second mode of operation, this corresponds to the selection of $K_{aP}=K_{bP}=1/3$.

The second power balancing procedure does not have any limitation over the P,Q envelope. This is because a negative sequence current component can always be calculated to guarantee that each of the three limbs of the voltage source converter 30 exchanges the same power with the AC network 50 under unbalanced AC network voltage conditions.

The following modes of operation of the voltage source converter 30 under unbalanced AC side voltage conditions are described with reference to the first configuration of the transformer arrangement of Figure 5, and with reference to the six equations describing the relationship between the current and voltage sequence components of the voltage source converter 30.

Since the transformer arrangement of Figure 5 is configured to prevent zero sequence voltage components from appearing in the transformer secondary windings 44, $V_{Gx}$ can only have positive and negative sequence voltage components. Similarly, any zero sequence current component generated by the voltage source converter 30 will be shunted by the transformer tertiary delta winding and therefore not appear in the primary transformer windings 46, assuming that the transformer tertiary delta winding is a low impedance winding. This enables additional modes of operation in which the zero sequence current components in the phase currents can be controlled to a non-zero value.

In a fifth case, the positive, negative and zero sequence current components in the phase currents can be controlled, and thus 6 equations for 6 constraints can be written. These 6 equations are the same as the equations written for the generalised analysis but substituting Vz =0 because of the transformer tertiary delta winding, and are written as follows:

$$P_{TOT} = 3V_P I_P \cos(\varphi_P) + 3V_N I_N \cos(\varphi_N)$$

$$Q_{TOT} = -3V_P I_P \sin(\varphi_P) - 3V_N I_N \sin(\varphi_N)$$

$$P_{aCC} = V_P I_N \cos(\vartheta_N + \varphi_N) + V_P I_Z \cos(\vartheta_Z + \varphi_Z) + V_N I_P \cos(\vartheta_N - \varphi_P)$$
$$+ V_N I_Z \cos(\vartheta_Z + \varphi_Z - \vartheta_N) = \left( K_{aP} - \frac{1}{3} \right) P_{TOT}$$

$$P_{bCC} = V_P I_N \cos(\vartheta_N + \varphi_N + (4/3)\pi) + V_P I_Z \cos(\vartheta_Z + \varphi_Z + (2/3)\pi)$$
$$+ V_N I_P \cos(\vartheta_N - \varphi_P + (4/3)\pi) + V_N I_Z \cos(\vartheta_Z + \varphi_Z$$
$$- \vartheta_N - (2/3)\pi) = \left( K_{bP} - \frac{1}{3} \right) P_{TOT}$$

$$V_P I_N \cos(\vartheta_N + \varphi_N) + V_N I_P \cos(\vartheta_N + \varphi_P) = 0$$

$$V_P I_N \sin(\vartheta_N + \varphi_N) + V_N I_P \sin(\vartheta_N + \varphi_P) = 0$$

The first two equations above represent the constraint to achieve the desired exchange of total AC active and reactive power between the voltage source converter 30 and the AC network 50. The next two equations represent the controllability of the ratio of the AC side active powers exchanged by the respective limbs with the AC network 50. The last two equations represent the cancellation of the 2ω component of the instantaneous power exchanged by the voltage source converter 30 with the AC network 50. The last two equations may be replaced by another two equations representing the controllability of the ratio of the AC side reactive powers exchanged by the respective limbs with the AC network 50 in a similar fashion to that described earlier in this specification.

In a sixth case, the negative sequence current components of the phase currents are set to zero, and only the positive sequence and zero sequence current components are controlled by the voltage source converter 30. This may be relevant when it is desirable to have a voltage source converter 30 that injects phase currents with only positive sequence current components into the AC network 50, with the zero sequence current component shunted by the transformer tertiary delta winding. It can be seen from the general equations that setting the negative sequence current component to zero excludes the possibility of controlling the 2ω component of the instantaneous power exchanged by the voltage source converter 30 with the AC network 50. Instead, the ratio of the AC side active powers or reactive powers exchanged by the respective limbs with the AC network 50 can be controlled by an appropriate choice of the zero sequence current components in the phase currents. For example, when the zero sequence current components in the phase currents are chosen to control the ratio of the AC side active powers, the equations are written as follows:

$$P_{TOT} = 3V_P I_P \cos(\varphi_P)$$

$$Q_{TOT} = -3V_P I_P \sin(\varphi_P)$$

$$P_{aCC} = V_P I_Z \cos(\vartheta_Z + \varphi_Z) + V_N I_P \cos(\vartheta_N - \varphi_P)$$
$$+ V_N I_Z \cos(\vartheta_Z + \varphi_Z - \vartheta_N) = \left( K_{aP} - \frac{1}{3} \right) P_{TOT}$$

$$P_{bCC} = V_P I_Z \cos(\vartheta_Z + \varphi_Z + (2/3)\pi) + V_N I_P \cos(\vartheta_N - \varphi_P + (4/3)\pi)$$
$$+ V_N I_Z \cos(\vartheta_Z + \varphi_Z - \vartheta_N - (2/3)\pi) = \left( K_{bP} - \frac{1}{3} \right) P_{TOT}$$

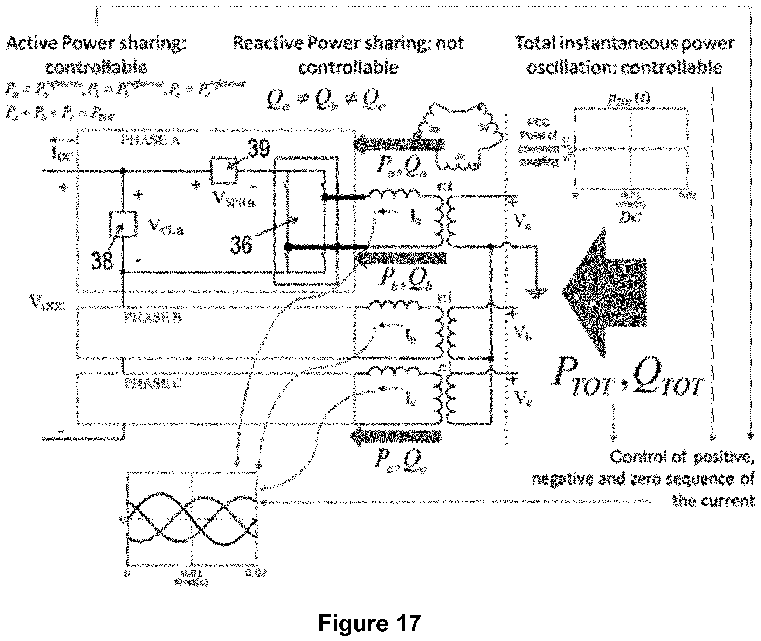

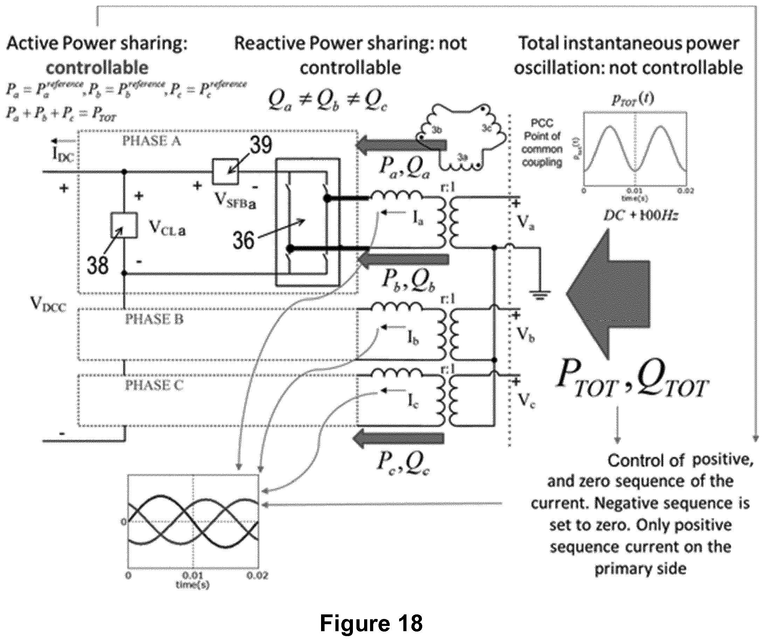

Two modes of operation under unbalanced AC side voltage conditions are possible for the voltage source converter 30 in respect of the second configuration of the transformer arrangement shown in Figure 5, and are described as follows with reference to Figures 17 and 18.

A fifth mode of operation illustrated in Figure 17 corresponds to the fifth case in which the positive, negative and zero sequence current components of the phase currents are controlled to be different from zero so as to effect the exchange of total AC active and reactive power between the voltage source converter 30 and the AC network 50, control the ratio of the AC side active powers, and cancel the 2ω component of the instantaneous power exchanged by the voltage source converter 30 with the AC network 50.

A sixth mode of operation illustrated in Figure 18 corresponds to the sixth case in which the negative sequence current components of the phase currents are set to zero, and the positive and zero sequence current components of the phase currents are controlled to be different from zero so as to effect the exchange of total AC active and reactive power between the voltage source converter 30 and the AC network 50, and control the ratio of the AC side active powers. No control over the 2ω component of the instantaneous power exchanged by the voltage source converter 30 with the AC network 50 is possible.

Since both the fifth and sixth modes of operation enables the control of the ratio of the AC side active powers, the second balancing procedure may be performed by forcing a symmetry between the AC side powers, i.e. $K_{aP}=K_{bP}=1/3$, in order to match the symmetry between the DC side powers, where the DC components of the voltage waveforms synthesized by the first sub-converters 38 are fixed to $1/3 \, V_{DCC}$. This ensures balance between the AC and DC side powers exchanged by each limb with the AC and DC networks 50,58 respectively.

The configuration of the controller 60 of the voltage source converter in the foregoing manner therefore enables the operation of the controller 60 under unbalanced AC side voltage conditions to perform the functions of: controlling of at least one sequence current component of a respective phase current at the AC side of each phase element 36 to control an exchange of power between the voltage source converter 30 and the AC network 50; and balancing the AC and DC side powers exchanged by each limb with the AC and DC networks 50,58 respectively so that a respective net change in energy stored in the capacitors 56 of each limb is controlled to be zero or substantially zero.

Such functions can be combined with the earlier-described approach of achieving an internal power balance between the first and second sub-converters 38,39. This earlier-described approach involves operating the first sub-converter 38 to synthesize a first 2nd harmonic voltage component, and operating the second sub-converter 39 to synthesize a second 2nd harmonic voltage component that is in anti-phase with the first 2nd harmonic voltage component, where both of the first and second voltage components are in-phase with a common current flowing through the first and second sub-converters 38,39.

However, under unbalanced AC side voltage conditions, the presence of negative and/or zero sequence components in the phase currents results in a variation of the amplitudes of the first voltage components synthesized by the first sub-converters 39. This is because different amplitudes of the first voltage components are required in order to achieve power balance between the first and second sub-converters 38,39 in each limb under the unbalanced AC side voltage conditions. This means that the second voltage components synthesized by the first sub-converters 39 are not balanced and symmetrical, which means that the summation of the first DC voltages results in a 2nd harmonic voltage ripple in the DC voltage presented to the DC network 58.

In order to prevent the 2nd harmonic voltage ripple from appearing in the DC voltage presented to the DC network 58, while the first and second 2nd harmonic voltage components are synthesized, each second sub-converter 39 synthesizes a respective third 2nd harmonic voltage component so as to cancel the corresponding first 2nd harmonic voltage component, wherein the third 2nd harmonic voltage component is in-quadrature with the current flowing through the second sub-converter 39.

The in-quadrature voltage components can be obtained by minimising a cost function that includes the amplitudes of the additional in-quadrature voltage components. This enables the voltage source converter 30 to filter the 2nd harmonic voltage ripple in the DC voltage presented to the DC network 58, with minimal impact of the ratings of the voltage source converter 30.

The specific cost function may vary, resulting in different amplitudes of in-quadrature 2nd harmonic voltage components but all with the same net result in terms of the filtering of the 2nd harmonic voltage ripple in the DC voltage presented to the DC network 58

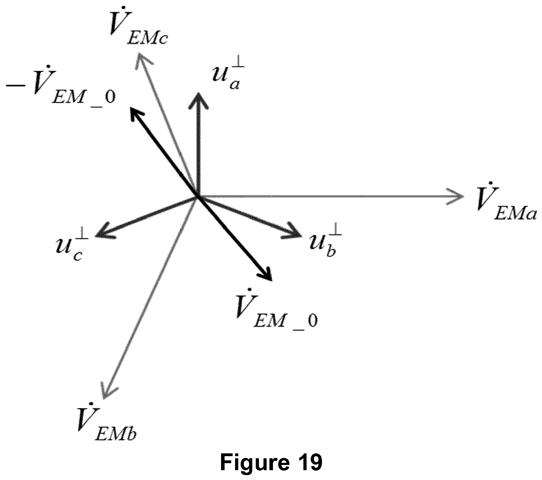

Figure 19 shows schematically a plurality of phasors $V_{EMa}$, $V_{EMb}$, $V_{EMc}$ of the in-phase first 2nd harmonic voltage components synthesized by the first sub-converters 39. $V_{EM\_0}$ is the sum of the three vectors, and represents the DC ripple that would appear if the in-quadrature third 2nd harmonic voltage components are not synthesized.

A vector of the same magnitude of $V_{EM\_0}$ but opposite phase can be generated by an appropriate selection of the amplitudes of the orthogonal vectors $u_a$, $u_b$, $u_c$. To minimise the impact on the ratings of the voltage source converter 30, and to maximise the level of unbalanced AC voltage conditions under which the voltage source converter 30 is able to sustain its operation, the selection of the amplitudes can be performed minimising a cost function $f$ of the amplitudes of the three in-quadrature 2nd harmonic voltage components that selects the smallest vectors capable of generating $-V_{EM\_0}$. The orthogonal 2nd harmonics generation problem can be expressed in general terms as:

$$\begin{cases} K_a^\perp u_a^\perp + K_b^\perp u_b^\perp + K_c^\perp u_c^\perp = -\dot{V}_{EM\_0} \\ f\left(K_a^\perp, K_b^\perp, K_c^\perp\right) = \min \end{cases}$$

The choice of the in-quadrature voltage components decouples the filtering of the DC ripple from the energy regulation of the capacitors 56 of the sub-converters 38,39. In fact, the in-quadrature voltage components interacting with the 2nd harmonic currents flowing in the sub-converters 38,39 do not produce any net average power components, and thereby do not have any effect on the energy regulation of the capacitors 56 of the sub-converters 38,39.

The synthesis of the third 2nd harmonic voltage components by the second sub-converters 39 therefore permits the regulation of the capacitors 56 of the sub-converters 38,39 under unbalanced AC side voltage conditions while ensuring that a ripple-free DC voltage is presented to the DC network 58.

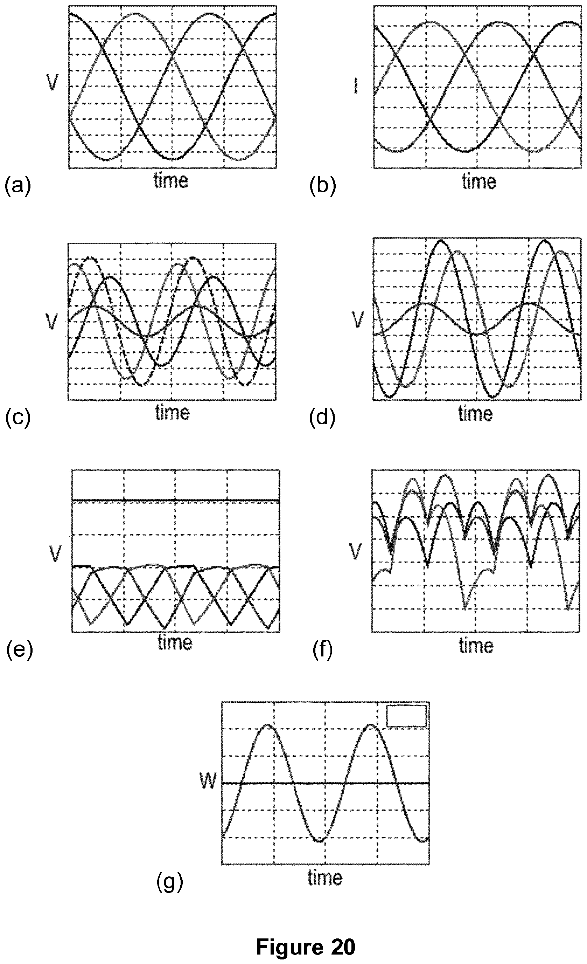

Figures 20 to 24 illustrate simulations of the operation of the voltage source converter 30 in different energy management modes under unbalanced AC side voltage conditions.

Each simulation is based on a 20MW demonstrator of the voltage source converter 30, with a nominal DC voltage of the DC network 58 of 20kV, a line to line AC voltage of 11kV and a transformer leakage impedance at the AC side 42 of each phase element 36 equal to 2.3mH, which corresponds to 12% leakage reactance. The P,Q operating envelope of the voltage source converter 30 is limited between ±20MW and +8.2/-6.6MVAR.

The operation of the voltage source converter 30 is observed assuming a 5% negative sequence voltage component, with phase $\theta_N = \pi$ with respect to the positive sequence voltage component, and a 5% zero sequence voltage component with phase $\theta_Z = 0$ with respect to the positive sequence voltage component. The considered operating point of the voltage source converter 30 is P=20MW and Q=8.2MVAR.

Each of Figures 20 to 24 includes a plurality of graphs in which:

graph (a) shows the AC network voltages of the AC network 50;

graph (b) shows the AC network currents of the AC network 50;

graph (c) shows the individual in-phase 2nd harmonic voltage components synthesized by the first sub-converters 39, and the sum of the in-phase 2nd harmonic voltage components;

graph (d) shows the in-quadrature 2nd harmonic voltage components synthesized by the second sub-converters 39;

graph (e) shows the individual voltage waveforms synthesized by the first sub-converters 38, and the sum of the voltage waveforms synthesized by the first sub-converters 38;

graph (f) shows the voltage waveforms synthesized by the second sub-converters 39; and

graph (g) shows the AC and DC instantaneous power of the voltage source converter 30.

Figure 20 illustrates the simulation of the operation of the voltage source converter 30 in an energy management mode in which the first power balancing procedure is combined with the first mode of operation, with reference to the electrical circuit shown in Figure 3.

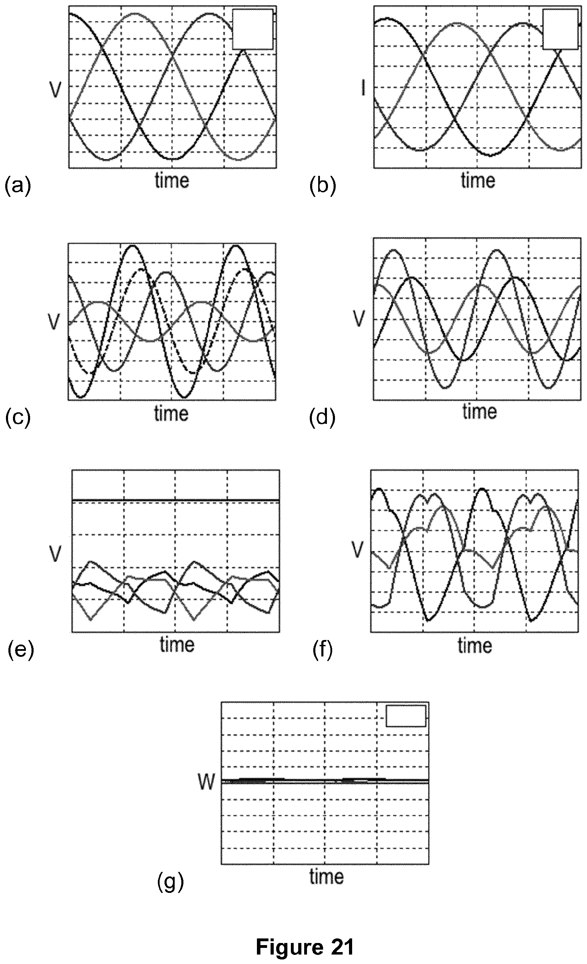

Figure 21 illustrates the simulation of the operation of the voltage source converter 30 in an energy management mode in which the first power balancing procedure is combined with the third mode of operation, with reference to the electrical circuit shown in Figure 3.

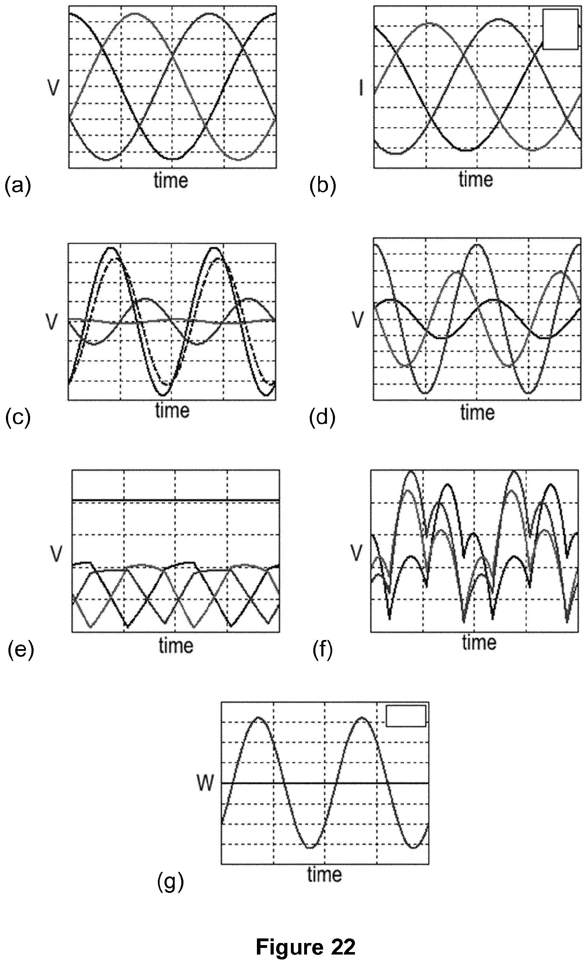

Figure 22 illustrates the simulation of the operation of the voltage source converter 30 in an energy management mode in which the second power balancing procedure is combined with the second mode of operation, with reference to the electrical circuit shown in Figure 3.

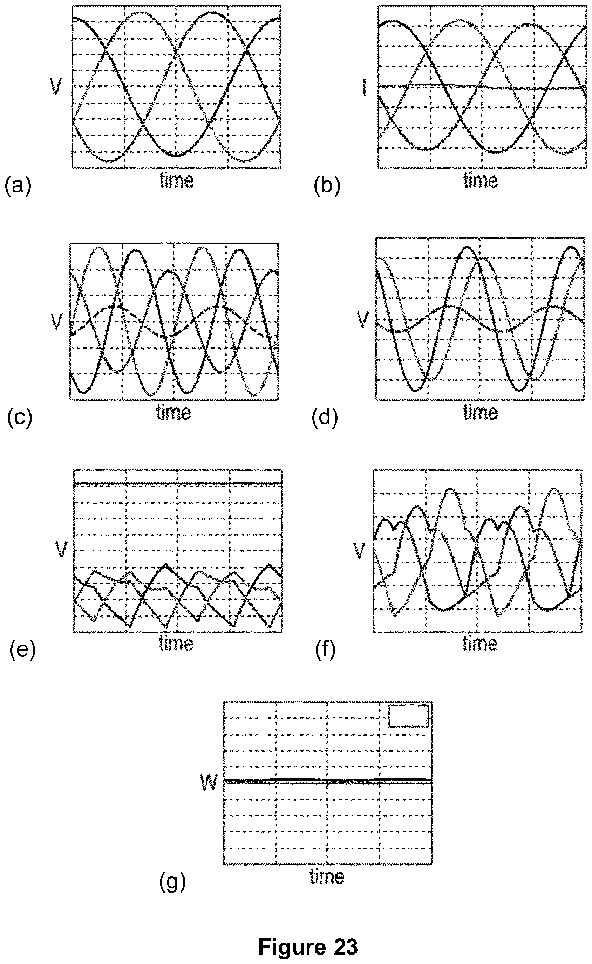

Figure 23 illustrates the simulation of the operation of the voltage source converter 30 in an energy management mode in which the second power balancing procedure is combined with the fifth mode of operation, with reference to the electrical circuit shown in Figure 5.

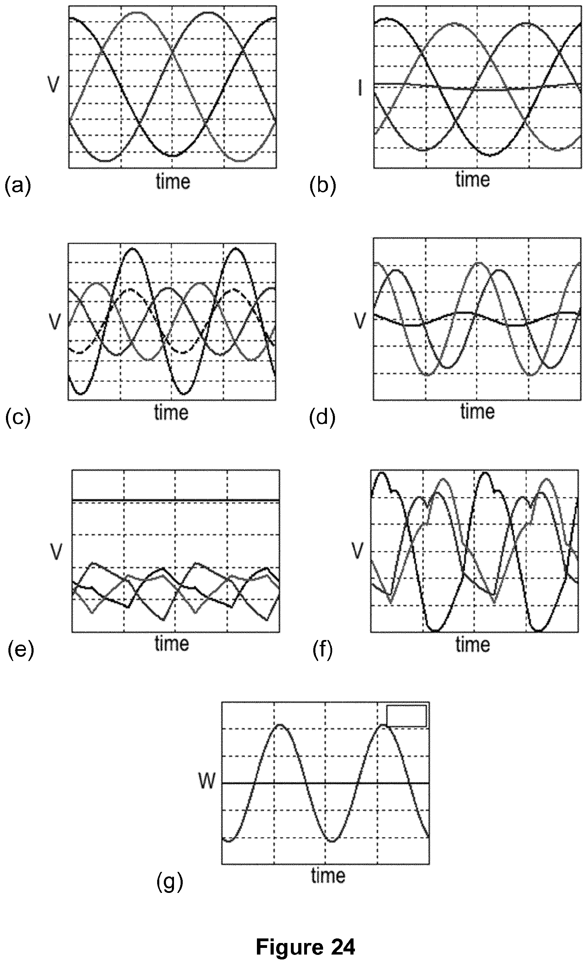

Figure 24 illustrates the simulation of the operation of the voltage source converter 30 in an energy management mode in which the second power balancing procedure is combined with the sixth mode of operation, with reference to the electrical circuit shown in Figure 5.

It can be seen from Figures 20 to 24 that the operation of the voltage source converter 30 in the different energy management modes under unbalanced AC side voltage conditions enables stable operation of the first and second sub-converters 38,39 due to the ability to maintain the internal energy balance in each limb while ensuring that a ripple-free DC voltage is presented to the DC network 50, thus protecting the DC network from undesirable voltage stresses. Furthermore, the ratings of the voltage source converter 30 required to operate in the different energy management modes under unbalanced AC side voltage conditions are comparable to the ratings of the voltage source converter 30 required to operate under balanced AC side voltage conditions, thus minimally impacting on the cost and size of the voltage source converter 30.

It will be appreciated that the numerical values given for the embodiment shown are merely chosen to help illustrate the working of the invention, and may be replaced by other numerical values.

## Claims

1. A voltage source converter (30) comprising first and second DC terminals (32,34) for connection to a DC network (58), the voltage source converter (30) including a plurality of limbs connected between the first and second DC terminals (32,34), each limb including:

    a phase element (36) having a plurality of switching elements (40) and at least one AC terminal for connection to a respective phase of a multi-phase AC network (50), the plurality of switching elements (40) configured to be switchable to selectively interconnect a DC side voltage at a DC side of the phase element (36) and an AC side voltage at an AC side (42) of the phase element (36);
    a first sub-converter (38) configured to be controllable to act as a waveform synthesizer to modify a first DC voltage presented to the DC network (50), the first sub-converter (38) including at least one energy storage device (56) capable of storing and releasing energy to selectively provide a voltage; and
    a second sub-converter (39) connected in series with the phase element (36) in an electrical block, the first sub-converter (38) connected in parallel with the electrical block, the second sub-converter (39) configured to be controllable to act as a waveform synthesizer to modify a second DC voltage presented to the DC side of the phase element (36), the second sub-converter (39) including at least one energy storage device (56) capable of storing and releasing energy to selectively provide a voltage,
    wherein the voltage source converter (30) further includes a controller (60) configured to selectively operate in an energy management mode when there is an imbalance between the AC side voltages ($V_{Ca}$,$V_{Cb}$,$V_{Cc}$) at the AC sides (42) of the phase elements (36), the controller (60) in the energy management mode configured to operate each limb so as to:

control at least one sequence current component of a respective phase current ($I_a$,$I_b$,$I_c$) at the AC side (42) of each phase element (36) to control an exchange of power between the voltage source converter (30) and the AC network (50); and

balance the AC and DC side powers exchanged by each limb with the AC and DC networks (50,58) respectively so that a respective net change in energy stored in the energy storage devices (56) of each limb is controlled to be zero or substantially zero.

2. A voltage source converter (30) according to Claim 1 wherein the at least one sequence current component of the respective phase current ($I_a$,$I_b$,$I_c$) controlled in the energy management mode of the controller (60) includes:

only a positive sequence current component;
only positive and negative sequence current components;
only positive and zero sequence current components; or
positive, negative and zero sequence current components.

3. A voltage source converter (30) according to any one of the preceding claims wherein the controller (60) in the energy management mode is configured to operate each limb so as to control the at least one sequence current component of the respective phase current ($I_a$,$I_b$,$I_c$) at the AC side (42) of each phase element (36) to control the ratio of the AC side active powers exchanged by the respective limbs with the AC network (50).

4. A voltage source converter (30) according to Claim 3 wherein the ratio of the AC side active powers is controlled to be equal or substantially equal.

5. A voltage source converter (30) according to any one of the preceding claims wherein the controller (60) in the energy management mode is configured to operate each limb so as to control the at least one sequence current component of the respective phase current ($I_a$,$I_b$,$I_c$) at the AC side (42) of each phase element (36) to control the ratio of AC side reactive powers exchanged by the respective limbs with the AC network (50).

6. A voltage source converter (30) according to any one of the preceding claims wherein the controller (60) in the energy management mode is configured to operate each limb so as to control the at least one sequence current component of the respective phase current ($I_a$,$I_b$,$I_c$) at the AC side (42) of each phase element (36) to minimise or cancel a power oscillation component of the instantaneous power exchanged by the voltage source converter (30) with the AC network (50).

7. A voltage source converter (30) according to any one of the preceding claims wherein the controller (60) in the energy management mode is configured to operate the first sub-converter (38) of each limb to modify the respective first DC voltage in order to balance the AC and DC side powers exchanged by the respective limb with the AC and DC networks (50,58) respectively so that a net change in energy stored in the energy storage devices (56) of the respective limb is controlled to be zero or substantially zero.

8. A voltage source converter (30) according to any one of the preceding claims wherein the controller (60) in the energy management mode is configured to operate each limb to modify the respective AC side voltage in order to balance the AC and DC side powers exchanged by the respective limb with the AC and DC networks (50,58) respectively so that a net change in energy stored in the energy storage devices (56) of the respective limb is controlled to be zero or substantially zero.

9. A voltage source converter (30) according to any one of the preceding claims further including a transformer arrangement, a first side of the transformer arrangement connected to the AC network (50), a second side of the transformer arrangement connected to the AC sides (42) of the phase elements (36), the transformer arrangement configured to prevent a transfer of zero sequence current components between the first and second sides of the transformer.

10. A voltage source converter (30) according to any one of the preceding claims wherein the controller (60) is configured to selectively control an exchange of energy between the first and second sub-converters (38,39) in each limb by:

for each limb, operating the first sub-converter (38) to synthesize at least one first voltage component, and operating the second sub-converter (39) to synthesize at least one second voltage component that is in anti-phase with the or each first voltage component, wherein each of the first and second voltage components is in-phase with a current flowing through the first and second sub-converters (38,39); and

for each limb, operating the second sub-converter (39) to synthesize at least one third voltage component so as to minimise or cancel the or each second voltage component, wherein the or each third voltage component is in-quadrature with the current flowing through the second sub-converter (39).

**11.** A voltage source converter (30) according to Claim 10 wherein each voltage component is any one of: a positive integer multiple of a 2nd harmonic voltage component; a 2nd harmonic voltage component, a 4th harmonic voltage component; an 8th harmonic voltage component; a 10th harmonic voltage component; or a $(3(2n-1) \pm 1)$th harmonic voltage component, whereby n is a positive integer multiple.

**12.** A voltage source converter (30) according to any one of the preceding claims wherein the plurality of limbs are connected in series between the first and second DC terminals (32,34).

**13.** A voltage source converter (30) according to any one of the preceding claims wherein the plurality of switching elements (40) in each phase element (36) includes two parallel-connected pairs of series-connected switching elements (40), a junction between each pair of series-connected switching elements (40) defining an AC terminal for connection to the respective phase of the AC network (50).

**14.** A voltage source converter (30) according to any one of the preceding claims wherein each sub-converter (38,39) includes at least one module (52), the or each module (52) including at least one switching element (54) and at least one energy storage device (56), the or each switching element (54) and the or each energy storage device (56) in the or each module (52) arranged to be combinable to selectively provide a voltage source.

**Patentansprüche**

**1.** Spannungsquellenwandler (30), umfassend erste und zweite Gleichstromanschlüsse (32,34) zur Verbindung mit einem Gleichstromnetzwerk (58), wobei der Spannungsquellenwandler (30) eine Vielzahl von Gliedern enthält, die zwischen den ersten und zweiten Gleichstromanschlüssen (32,34) verbunden sind, jedes Glied enthaltend:

ein Phasenelement (36) mit einer Vielzahl von Schaltelementen (40) und mindestens einem Wechselstromanschluss zur Verbindung mit einer entsprechenden Phase eines mehrphasigen Wechselstromnetzwerkes (50), wobei die Vielzahl von Schaltelementen (40) ausgebildet ist, schaltbar zu sein, um selektiv eine Spannung an der Gleichstromseite an einer Gleichstromseite des Phasenelements (36) und eine Spannung an der Wechselstromseite an einer Wechselstromseite (42) des Phasenelements (36) zu verbinden;
einen ersten Teilwandler (38), der ausgebildet ist, steuerbar zu sein, um als ein Wellenformsynthesizer zu wirken, um eine erste Gleichspannung, die dem Gleichstromnetzwerk (50) präsentiert wird, zu modifizieren, wobei der erste Teilwandler (38) mindestens eine Energiespeichervorrichtung (56) enthält, die imstande ist, Energie zu speichern und freizusetzen, um selektiv eine Spannung bereitzustellen; und
einen zweiten Teilwandler (39), der in Serie mit dem Phasenelement (36) in einem elektrischen Block verbunden ist, wobei der erste Teilwandler (38) parallel mit dem elektrischen Block verbunden ist, der zweite Teilwandler (39) ausgebildet ist, steuerbar zu sein, um als ein Wellenformsynthesizer zu wirken, um eine zweite Gleichspannung, die der Gleichstromseite des Phasenelements (36) präsentiert wird, zu modifizieren, wobei der zweite Teilwandler (39) mindestens eine Energiespeichervorrichtung (56) enthält, die imstande ist, Energie zu speichern und freizusetzen, um selektiv eine Spannung bereitzustellen,
wobei der Spannungsquellenwandler (30) weiter eine Steuerung (60) enthält, die ausgebildet ist, selektiv in einem Energiemanagementmodus zu arbeiten, wenn ein Ungleichgewicht zwischen den Spannungen an der Wechselstromseite ($V_{Ca}, V_{Cb}, V_{Cc}$) an den Wechselstromseiten (42) der Phasenelemente (36) herrscht, wobei die Steuerung (60) im Energiemanagementmodus ausgebildet ist, jedes Glied zu betreiben, um:

mindestens eine Sequenzstromkomponente eines entsprechenden Phasenstroms ($I_a, I_b, I_c$) an der Wechselstromseite (42) jedes Phasenelements (36) zu steuern, um einen Leistungsaustausch zwischen dem Spannungsquellenwandler (30) und dem Wechselstromnetzwerk (50) zu steuern; und
die Leistungen der Wechselstrom- und Gleichstromseite, die durch jedes Glied mit dem Wechselstrom- bzw. Gleichstromnetzwerk (50,58) ausgetauscht werden, auszugleichen, sodass eine entsprechende Nettoänderung in Energie, die in den Energiespeichervorrichtungen (56) jedes Glieds gespeichert ist, gesteuert wird, null oder im Wesentlichen null zu sein.

2. Spannungsquellenwandler (30) nach Anspruch 1, wobei die mindestens eine Sequenzstromkomponente des entsprechenden Phasenstroms ($I_a$,$I_b$,$I_c$), die im Energiemanagementmodus der Steuerung (60) gesteuert wird, enthält:

nur eine positive Sequenzstromkomponente;
nur positive und negative Sequenzstromkomponenten;
nur positive und Null-Sequenzstromkomponenten; oder
positive, negative und Null-Sequenzstromkomponenten.

3. Spannungsquellenwandler (30) nach einem der vorstehenden Ansprüche, wobei die Steuerung (60) im Energiemanagementmodus ausgebildet ist, jedes Glied so zu betreiben, dass die mindestens eine Sequenzstromkomponente des entsprechenden Phasenstroms ($I_a$,$I_b$,$I_c$) an der Wechselstromseite (42) jedes Phasenelements (36) gesteuert wird, um das Verhältnis der aktiven Leistungen an der Wechselstromseite zu steuern, die durch die entsprechenden Glieder mit dem Wechselstromnetzwerk (50) ausgetauscht werden.

4. Spannungsquellenwandler (30) nach Anspruch 3, wobei das Verhältnis der aktiven Leistungen an der Wechselstromseite so gesteuert wird, dass es gleich oder im Wesentlichen gleich ist.

5. Spannungsquellenwandler (30) nach einem der vorstehenden Ansprüche, wobei die Steuerung (60) im Energiemanagementmodus ausgebildet ist, jedes Glied so zu betreiben, dass die mindestens eine Sequenzstromkomponente des entsprechenden Phasenstroms ($I_a$,$I_b$,$I_c$) an der Wechselstromseite (42) jedes Phasenelements (36) gesteuert wird, um das Verhältnis der reaktiven Leistungen an der Wechselstromseite zu steuern, die durch die entsprechenden Glieder mit dem Wechselstromnetzwerk (50) ausgetauscht werden.

6. Spannungsquellenwandler (30) nach einem der vorstehenden Ansprüche, wobei die Steuerung (60) im Energiemanagementmodus ausgebildet ist, jedes Glied so zu betreiben, dass die mindestens eine Sequenzstromkomponente des entsprechenden Phasenstroms ($I_a$,$I_b$,$I_c$) an der Wechselstromseite (42) jedes Phasenelements (36) gesteuert wird, um eine Leistungsschwingungskomponente der momentanen Leistung zu eliminieren, die durch den Spannungsquellenwandler (30) mit dem Wechselstromnetzwerk (50) ausgetauscht wird.

7. Spannungsquellenwandler (30) nach einem der vorstehenden Ansprüche, wobei die Steuerung (60) im Energiemanagementmodus ausgebildet ist, den ersten Teilwandler (38) jedes Glieds zu betreiben, um die entsprechende erste Gleichspannung zu modifizieren, um die Leistungen an der Wechselstrom- und Gleichstromseite auszugleichen, die durch das entsprechende Glied mit dem Wechselstrom- bzw. Gleichstromnetzwerk (50,58) ausgetauscht werden, sodass eine Nettoänderung in Energie, die in den Energiespeichervorrichtungen (56) des entsprechenden Glieds gespeichert ist, gesteuert wird, null oder im Wesentlichen null zu sein.

8. Spannungsquellenwandler (30) nach einem der vorstehenden Ansprüche, wobei die Steuerung (60) im Energiemanagementmodus ausgebildet ist, jedes Glied zu betreiben, um die entsprechende Spannung an der Wechselstromseite zu modifizieren, um die Leistungen an der Wechselstrom- und Gleichstromseite auszugleichen, die durch das entsprechende Glied mit dem Wechselstrom- bzw. Gleichstromnetzwerk (50,58) ausgetauscht werden, sodass eine Nettoänderung in Energie, die in den Energiespeichervorrichtungen (56) des entsprechenden Glieds gespeichert ist, gesteuert wird, null oder im Wesentlichen null zu sein.

9. Spannungsquellenwandler (30) nach einem der vorstehenden Ansprüche, weiter enthaltend eine Transformatoranordnung, wobei eine erste Seite der Transformatoranordnung mit dem Wechselstromnetzwerk (50) verbunden ist, eine zweite Seite der Transformatoranordnung mit den Wechselstromseiten (42) des Phasenelements (36) verbunden sind, wobei die Transformatoranordnung ausgebildet ist, eine Überführung von Null-Sequenzstromkomponenten zwischen der ersten und zweiten Seite des Transformators zu verhindern.

10. Spannungsquellenwandler (30) nach einem der vorstehenden Ansprüche, wobei die Steuerung (60) ausgebildet ist, selektiv einen Energieaustausch zwischen dem ersten und zweiten Teilwandler (38,39) in jedem Glied zu steuern durch:

für jedes Glied, Betreiben des ersten Teilwandlers (38), um mindestens eine erste Spannungskomponente zu synthetisieren, und Betreiben des zweiten Teilwandlers (39), um mindestens eine zweite Spannungskomponente zu synthetisieren, die in Gegenphase mit der oder jeder ersten Spannungskomponente ist, wobei jede der ersten und zweiten Spannungskomponente mit einem Strom phasengleich ist, der durch den ersten und zweiten Teilwandler (38,39) fließt; und

für jedes Glied, Betreiben des zweiten Teilwandlers (39), um mindestens eine dritte Spannungskomponente zu synthetisieren, um so die zweite Spannungskomponente zu minimieren oder zu eliminieren, wobei die oder jede dritte Spannungskomponente in Quadratur mit dem Strom ist, der durch den zweiten Teilwandler (39) fließt.

**11.** Spannungsquellenwandler (30) nach Anspruch 10, wobei jede Spannungskomponente eines ist von: einem positiven ganzzahligen Vielfachen einer 2. harmonischen Spannungskomponente; einer 2. harmonischen Spannungskomponente; einer 4. harmonischen Spannungskomponente; einer 8. harmonischen Spannungskomponente; einer 10. harmonischen Spannungskomponente; oder einer (3(2n-1)$\pm$1)-ten harmonischen Spannungskomponente, wobei n ein positives ganzzahliges Vielfaches ist.

**12.** Spannungsquellenwandler (30) nach einem der vorstehenden Ansprüche, wobei die Vielzahl von Gliedern in Serie zwischen den ersten und zweiten Gleichstromanschlüssen (32,34) verbunden sind.

**13.** Spannungsquellenwandler (30) nach einem der vorstehenden Ansprüche, wobei die Vielzahl von Schaltelementen (40) in jedem Phasenelement (36) zwei parallel verbundene Paare von serienverbundenen Schaltelementen (40) enthält, wobei eine Verbindungsstelle zwischen jedem Paar von serienverbundenen Schaltelementen (40) einen Wechselstromanschluss zur Verbindung mit der entsprechenden Phase des Wechselstromnetzwerkes (50) definiert.

**14.** Spannungsquellenwandler (30) nach einem der vorstehenden Ansprüche, wobei jeder Teilwandler (38,39) mindestens ein Modul (52) enthält, wobei das oder jedes Modul (52) mindestens ein Schaltelement (54) und mindestens eine Energiespeichervorrichtung (56) enthält, wobei das oder jedes Schaltelement (54) und die oder jede Energiespeichervorrichtung (56) in dem oder jedem Modul (52) angeordnet ist, kombinierbar zu sein, um selektiv eine Spannungsquelle bereitzustellen.

**Revendications**

**1.** Convertisseur de source de tension (30) comprenant des première et seconde bornes de CC (32, 34) pour une connexion à un réseau CC (58), le convertisseur de source de tension (30) incluant une pluralité de branches connectées entre les première et seconde bornes CC (32, 34), chaque branche incluant :

un élément de phase (36) ayant une pluralité d'éléments de commutation (40) et au moins une borne de CA pour une connexion à une phase respective d'un réseau CA à phases multiples (50), la pluralité d'éléments de commutation (40) configurée pour pouvoir être commutée afin d'interconnecter sélectivement une tension côté CC à un côté CC de l'élément de phase (36) et une tension côté CA à un côté CA (42) de l'élément de phase (36) ;

un premier sous-convertisseur (38) configuré pour pouvoir être commandé pour agir en tant que synthétiseur de forme d'onde afin de modifier une première tension CC présentée au réseau CC (50), le premier sous-convertisseur (38) incluant au moins un dispositif de stockage d'énergie (56) capable de stocker et de libérer de l'énergie pour fournir sélectivement une tension ; et

un second sous-convertisseur (39) connecté en série avec l'élément de phase (36) dans un bloc électrique, le premier sous-convertisseur (38) connecté en parallèle avec le bloc électrique, le second sous-convertisseur (39) configuré pour pouvoir être commandé afin d'agir en tant que synthétiseur de forme d'onde pour modifier une seconde tension CC présentée du côté CC de l'élément de phase (36), le second sous-convertisseur (39) incluant au moins un dispositif de stockage d'énergie (56) capable de stocker et de libérer de l'énergie afin de fournir sélectivement une tension,

dans lequel le convertisseur de source de tension (30) inclut en outre un dispositif de commande (60) configuré pour fonctionner sélectivement dans un mode de gestion d'énergie lorsqu'il existe un déséquilibre entre les tensions côté CA ($V_{Ca}$, $V_{Cb}$, $V_{Cc}$) des côtés CA (42) des éléments de phase (36), le dispositif de commande (60) dans le mode de gestion d'énergie étant configuré pour faire fonctionner chaque branche de manière à :

commander au moins une composante de courant de séquence d'un courant de phase respectif ($I_a$, $I_b$, $I_c$) du côté CA (42) de chaque élément de phase (36) afin de commander un échange de puissance entre le convertisseur de source de tension (30) et le réseau CA (50) ; et

équilibrer les puissances côté CA et CC échangées par chaque branche avec les réseaux CA et CC (50, 58), respectivement, de sorte qu'une variation nette respective de l'énergie stockée dans les dispositifs de stockage d'énergie (56) de chaque branche est commandée de manière à être nulle ou sensiblement nulle.

2. Convertisseur de source de tension (30) selon la revendication 1, dans lequel la au moins une composante de courant de séquence du courant de phase respectif ($I_a$, $I_b$, $I_c$) commandée dans le mode de gestion d'énergie du dispositif de commande (60) inclut :

seulement une composante de courant de séquence positive ;
seulement des composantes de courant de séquence positive et négative ;
seulement des composantes de courant de séquence positive et nulle ; ou
des composantes de courant de séquence positive, négative et nulle.

3. Convertisseur de source de tension (30) selon l'une quelconque des revendications précédentes, dans lequel le dispositif de commande (60) en mode de gestion d'énergie est configuré pour faire fonctionner chaque branche de manière à commander la au moins une composante de courant de séquence d'un courant de phase respectif ($I_a$, $I_b$, $I_c$) du côté CA (42) de chaque élément de phase (36) pour commander le rapport des puissances actives du côté CA échangées par les branches respectives avec le réseau CA (50).

4. Convertisseur de source de tension (30) selon la revendication 3, dans lequel le rapport des puissances actives côté CA est commandé pour être égal ou sensiblement égal.

5. Convertisseur de source de tension (30) selon l'une quelconque des revendications précédentes, dans lequel le dispositif de commande (60) en mode de gestion d'énergie est configuré pour faire fonctionner chaque branche de manière à commander la au moins une composante de courant de séquence du courant de phase respectif ($I_a$, $I_b$, $I_c$) du côté CA (42) de chaque élément de phase (36) afin de commander le rapport de puissances réactives côté CA échangées par les branches respectives avec le réseau CA (50).

6. Convertisseur de source de tension (30) selon l'une quelconque des revendications précédentes, dans lequel le dispositif de commande (60) en mode de gestion d'énergie est configuré pour faire fonctionner chaque branche de manière à commander la au moins une composante de courant de séquence d'un courant de phase respectif ($I_a$, $I_b$, $I_c$) du côté CA (42) de chaque élément de phase (36) afin de minimiser ou d'annuler une composante d'oscillation de puissance de la puissance instantanée échangée par le convertisseur de source de tension (30) avec le réseau CA (50).

7. Convertisseur de source de tension (30) selon l'une quelconque des revendications précédentes, dans lequel le dispositif de commande (60) en mode de gestion d'énergie est configuré pour faire fonctionner le premier sous-convertisseur (38) de chaque branche afin de modifier la première tension CC respective pour équilibrer les puissances côté CA et CC échangées par la branche respective avec les réseaux CA et CC (50, 58), respectivement, de sorte qu'une variation nette d'énergie stockée dans les dispositifs de stockage d'énergie (56) de la branche respective est commandée pour être nulle ou sensiblement nulle.

8. Convertisseur de source de tension (30) selon l'une quelconque des revendications précédentes, dans lequel le dispositif de commande (60) en mode de gestion d'énergie est configuré pour faire fonctionner chaque branche afin de modifier la première tension côté CA pour équilibrer les puissances côté CA et CC échangées par la branche respective avec les réseaux CA et CC (50, 58) respectivement, de sorte qu'un changement net d'énergie stockée dans les dispositifs de stockage d'énergie (56) de la branche respective soit commandée pour être nulle ou sensiblement nulle.

9. Convertisseur de source de tension (30) selon l'une quelconque des revendications précédentes, incluant en outre un agencement de transformateur, un premier côté de l'agencement de transformateur connecté au réseau CA (50), un second côté de l'agencement de transformateur connecté aux côtés CA (42) des éléments de phase (36), l'agencement de transformateur configuré pour empêcher un transfert de composantes de courant de séquence nulles entre les premier et second côtés du transformateur.

10. Convertisseur de source de tension (30) selon l'une quelconque des revendications précédentes, dans lequel le dispositif de commande (60) est configuré pour commander sélectivement un échange d'énergie entre les premier et second sous-convertisseurs (38, 39) dans chaque branche en :

pour chaque branche, faisant fonctionner le premier sous-convertisseur (38) pour synthétiser au moins une première composante de tension, et faisant fonctionner le second sous-convertisseur (39) pour synthétiser au moins une deuxième composante de tension en opposition de phase avec la ou chaque première composante de tension, dans lequel chacun des première et deuxième composantes de tension est en phase avec un courant CA dans les premier et second sous-convertisseurs (38, 39) ; et

pour chaque branche, faisant fonctionner le second sous-convertisseur (39) pour synthétiser au moins une troisième composante de tension de manière à minimiser ou annuler la ou chaque deuxième composante de tension, ou chaque troisième composante de tension étant en quadrature avec le courant traversant le second sous-convertisseur (39).

11. Convertisseur de source de tension (30) selon la revendication 10, dans lequel chaque composante de tension est un quelconque parmi : un multiple entier positif d'une composante de tension de $2^e$ harmonique ; une composante de tension du $2^e$ harmonique, une composante de tension de $4^e$ harmonique ; une composante de tension de $8^e$ harmonique ; une composante de tension de $10^e$ harmonique ; ou une composante de tension de $(3(2n-1)\pm1)^e$ harmonique, n étant un multiple entier positif.

12. Convertisseur de source de tension (30) selon l'une quelconque des revendications précédentes, dans lequel la pluralité de branches sont connectées en série entre les première et seconde bornes CC (32, 34).

13. Convertisseur de source de tension (30) selon l'une quelconque des revendications précédentes, dans lequel la pluralité d'éléments de commutation (40) dans chaque élément de phase (36) inclut deux paires connectées en parallèle d'éléments de commutation connectés en série (40), une jonction entre chaque paire d'éléments de commutation connectés en série (40) définissant une borne CA pour une connexion à la phase respective du réseau CA (50).

14. Convertisseur de source de tension (30) selon l'une quelconque des revendications précédentes, dans lequel chaque sous-convertisseur (38, 39) inclut au moins un module (52), le ou chaque module (52) incluant au moins un élément de commutation (54) et au moins un dispositif de stockage d'énergie (56), le ou chaque élément de commutation (54) et le ou chaque dispositif de stockage d'énergie (56) dans le ou chaque module (52) agencés pour pouvoir être combinés afin de fournir sélectivement une source de tension.

**Figure 1**

54

52

56

**Figure 2a**

54

54

52

56

54

**Figure 2b**

Figure 3

Figure 4

**Figure 5**

Figure 6

Figure 7

**Figure 8**

**Figure 9**

Figure 10

**Figure 11**

Figure 12

Figure 13

**Figure 14**

Figure 15

Figure 16

EP 3 361 619 B1

Figure 17

Figure 18

**Figure 19**

**Figure 20**

(a)

(b)

(c)

(d)

(e)

(f)

(g)

**Figure 21**

**Figure 22**

**Figure 23**

(a)  time

(b)  time

(c)  time

(d)  time

(e)  time

(f)  time

(g)  time

**Figure 24**

**EP 3 361 619 B1**

## REFERENCES CITED IN THE DESCRIPTION

**Patent documents cited in the description**

- EP 3096446 A

- GB 2519793 A